# EUROPEAN PATENT APPLICATION

(11) **EP 2 433 993 A1**
(43) Date of publication of application: **28.03.2012**
(21) Application number: 10777718.7
(22) Date of filing: 17.05.2010
(51) Int. Cl.: C09J 7/00, C09J 183/04, G02F 1/1335

(54) **OPTICAL TRANSPARENT PRESSURE-SENSITIVE ADHESIVE MATERIAL, OPTICAL TRANSPARENT PRESSURE-SENSITIVE ADHESIVE LAMINATE, AND PROCESS FOR PRODUCING SAME**

(30) Priority: 18.05.2009 JP 2009119540
(71) Applicant: Taica Corporation, Minato-ku Tokyo 108-0074 (JP)
(72) Inventor: MASUDA Masahiko, Shizuoka-shi Shizuoka 424-0911 (JP)
(74) Representative: Müller-Boré & Partner Patentanwälte
(86) International application number: PCT/JP2010/058277
(87) International publication number: WO 2010/134485

(57) **Abstract**

A highly pressure-sensitive adhesive optical transparent pressure-sensitive adhesive body or optical transparent pressure-sensitive adhesive laminate which stably provide peeling site selectivity between both sides of the transparent pressure-sensitive adhesive body and a release sheet in the case of pasting, whereas stably and easily express peeling site selectivity between both sides of the transparent pressure-sensitive adhesive body in the case of rework, that is, re-pasting, as well as superior adhesion stability after pasting, and a method for producing the same.

An optical transparent pressure-sensitive adhesive body and the like having pressure-sensitive adhesive surface (a) and pressure-sensitive adhesive surface (b) having different pressure-sensitive adhesive property from each other, and being formed with an addition reaction type silicone gel, **characterized in that** pressure-sensitive adhesive performance (Ga) of pressure-sensitive adhesive surface (a) and pressure-sensitive adhesive performance (Gb) of pressure-sensitive adhesive surface (b) satisfy a relationship of Ga < Gb, and pressure-sensitive adhesive performance (Ga) and pressure-sensitive adhesive performance (Gb) have 5 to 32 in ball number and 2 to 12 in ball number difference in the tilt type ball tack test (tilt angle: 30 degrees) according to JIS Z0237; and that pressure-sensitive adhesive surface (a) and pressure-sensitive adhesive surface (b) are formed by tightly adhering an uncured raw material of said addition reaction type silicone gel to different release film (A) and release film (B) and thermal-curing them, and the release film (A) and the release film (B) have a release treatment layer comprising a fatty acid amide type additive.

## Description

### TECHNICAL FIELD

The present invention relates to an optical transparent pressure-sensitive adhesive body and an optical transparent pressure-sensitive adhesive laminate which are used by being pasted to optical components, and a method for producing for the same. In more detail, the present invention relates to a highly pressure-sensitive adhesive optical transparent pressure-sensitive adhesive body and optical transparent pressure-sensitive adhesive laminate which stably provide peeling site selectivity between both sides of the transparent pressure-sensitive adhesive body and a release sheet in the case of pasting to optical components, whereas stably and easily express peeling site selectivity of both sides of the transparent pressure-sensitive adhesive body in the case of rework, that is, re-pasting, in which the transparent pressure-sensitive adhesive body is removed from optical components and re-pasted again, or reuse (recycle) of optical components, and a method for producing for the same.

### BACKGROUND ART

Generally, in order to improve handling and mass productivity (automation) when optical components are assembled by pasting a transparent pressure-sensitive adhesive sheet, it is important that peeling site selectivity between the transparent pressure-sensitive adhesive sheet and a release sheet can be stably obtained. In addition, since more importance has been emphasized on product designing considering environment, resource protection, and cost reduction by improving yield, in a production system corresponding to the design considering even rework in assembling optical components and recycle, it becomes important that peeling site selectivity is stably - expressed when a transparent pressure-sensitive adhesive sheet is removed from optical components.
For the peeling site selectivity between a transparent pressure-sensitive adhesive sheet and a release sheet, heretofore, a technique in which peeling force of a peeling sheet to be pasted on the surface side and the back side of a transparent pressure-sensitive adhesive sheet is changed, for example, a method in which kind of a release sheet is changed between the surface side and the back side, or a method in which pressure-sensitive adhesive property of a transparent pressure-sensitive adhesive sheet is changed by applying a surface treatment on one side of the transparent pressure-sensitive adhesive sheet, had been employed.

However, in the method in which kind of release sheet is changed between the surface side and the back side, even though selectivity in the peeling side of the pressure-sensitive adhesive sheet can be stabilized, a lot of tests and verifications are required to match pressure-sensitive adhesive property between a release sheet and a transparent pressure-sensitive adhesive sheet, so that stability in peeling the other side of release film is also optimized after pasting to the optical components, and this has become a big problem to realize this method practically. In addition, in each time when specification of transparent pressure-sensitive adhesive sheet or design of adherend is changed, there are many cases where re-examination is required, and the matching has to rely on empirical one.
In addition, in the method in which pressure-sensitive adhesive property of a transparent pressure-sensitive adhesive sheet is changed by applying surface treatment, mass productivity becomes worse corresponding to increase of the surface treatment step, and further, since fine control of pressure-sensitive adhesive property is difficult, and a special equipment or an environmentally harmful solvent has been frequently used.
Still further, in the above-mentioned methods and the like, rework in assembling and recycling and recovery of optical components had not been considered.

Heretofore, several pressure-sensitive adhesive sheets or adhesive sheets for optical components have been proposed. For example, in Patent Literature 1, there is proposed a light transmissive pressure-sensitive adhesive sheet characterized by providing high visibility, impact absorbing property, and productivity which allow the sheet being mounted between a liquid crystal display panel and a transparent protective plate protecting said liquid crystal display panel, and comprising a transparent gel having ball number of 5 to 30 (tilt angle: 30 degrees) in an tilt type ball-tack test according to JIS Z0237 or preferably a silicone gel having penetration of 20 to 160 (JIS K2207, load: 50 g) so as to prevent entraining of air and allow to paste in placing the pressure-sensitive adhesive sheet. And also, in Patent Literature 2, in order to provide a cross-linked silicone type adhesive sheet in which peeling face is stabilized when each of protective films adhered tightly to both sides of the adhesive sheet is peeled off, and a method for producing such sheet efficiently, there are proposed a cross-linked silicone adhesive sheet having a thickness of 100 µm or less and protective films being adhered tightly on the both sides thereof, **characterized in that** peeling forces of said protective films to said sheet are 5.0 N/m or less, respectively, and difference of peeling forces of said protective films is 0.2 N/m or more, and a method for producing the cross-linked silicone type adhesive sheet by forming a cross-linkable silicone composition in a film-like form by sandwiching said composition between two protective films consisting of different kinds of materials from each other so that a film thickness of said composition becomes 100 µm or less, then cross-linking said composition.

In an actual production line in which these pressure-sensitive adhesive sheets are mounted in an image display device, a pressure-sensitive adhesive sheet on which release film for protecting pressure-sensitive adhesive surface is laminated is fed, and the pressure-sensitive adhesive sheet is pasted to an adherend (for example, liquid crystal device) after peeling off the release film from the pressure-sensitive adhesive sheet. However, since the pressure-sensitive adhesive sheet described in Patent Literature 1 does not have peeling site selectivity between the surface side and the back side of the pressure-sensitive adhesive sheet, in mass production of an image display device, a most suitable release sheet has to be explored in each case corresponding to mounting specification, and therefore, quick and stable response to mass production could not be done.
In addition, in the case of the cross-linked silicone type adhesive sheet described in Patent Literature 2, although the problem described in Patent Literature 1 can be solved due to superior peeling site selectivity of a release sheet and adhesive strength to an adherend, this is a technology supposing, so called, a pressure-sensitive adhesive tape having a sheet thickness of 100 µm or less, and not the one which can realize stable peeling site selectivity in a sheet having a thickness exceeding 100 µm, in particular, a sheet having viscoelasticity. Further, it has not been considered to ensure superior re-peeling property and peeling site selectivity even for re-pasting in reworking for defective products which is unavoidable in mass production.
An example of the case when reworking is required includes a case, when air bubble is entrapped during pasting work in an application to a display, where a work such as re-pasting is required because luminance, brightness and hue become uneven to cause uneven display by said air bubble, or part replacement due to misalignment of pasting position or flaws in appearance, and the like.
Therefore, corresponding to the above-described problems or defects, it is demanded that peeling site selectivity between transparent pressure-sensitive adhesive sheet and release sheet is stably obtained in the case of pasting, whereas a performance that peeling site selectivity between both sides of a transparent pressure-sensitive adhesive sheet is stably and easily expressed is demanded in the case of rework, that is, re-pasting, when the transparent pressure-sensitive adhesive sheet is removed from an optical component.

To the above-described requirements, the present applicant has already proposed an optical transparent pressure-sensitive adhesive body of single layer having different pressure-sensitive adhesive properties and peeling selectivity between the surface side and the back side and further peeling site selectivity for a case of rework, wherein an optical transparent pressure-sensitive adhesive material having different pressure-sensitive adhesive properties between the surface side and the back side in a ball tack number range of 3 to 15 is obtained by curing a pressure-sensitive adhesive addition type silicone raw materials in contact with different release films for the surface side and the back side or in contact with air for one side, an optical transparent pressure-sensitive adhesive laminate obtained by laminating said optical transparent pressure-sensitive adhesive body, and a method for producing the same (JP Application No. 2007-297782).
By this proposal, the conventional problems were solved and realizations of superior peeling site selectivity and reworkability became possible. However, recently pasting of an adherend such as LCD (liquid crystal display) and an optical transparent pressure-sensitive adhesive body has been studied in detail, in which long period of tight adhesion stability after pasting has been demanded. From such viewpoint, a demand from the market for an optical transparent pressure-sensitive adhesive having further higher pressure-sensitive adhesive property has been heightened. For example, if pressure-sensitive adhesive force is insufficient, when a LCD and a transparent protective plate for said LCD as an adherend are pasted under pressure or vacuum through an optical transparent pressure-sensitive adhesive body, residual stress is generated in the pasted laminate after pasting in relation with variations in thickness or flatness of the adherends. And due to the residual stress after pasting, air babbles are generated in pasting interface between the pressure-sensitive adhesive body and said adherend to cause a problem that a fatal defect for an image display device is generated. In addition, recently, since a transparent protective plate for image display device has been applied with various surface treatments (for example, low reflection film treatment (AR treatment)), an adherend having a low adhesive property to a pressure-sensitive adhesive body is sometimes employed, from the viewpoint of suppressing generation of said pasting defect, an optical transparent pressure-sensitive adhesive body having a higher pressure-sensitive adhesive property has been demanded.

However, if an optical transparent pressure-sensitive adhesive material is made so highly pressure-sensitive adhesive as it exceeds ball number 15 in the ball tack test, peeling force (peeling strength) from a release film becomes high correspondingly, and it has become clear that even using a release film significantly superior in light peeling property such as conventional fluorine type, alkyd type, or further silicone type, realization of superior peeling selectivity is difficult.
Consequently, new developments of a highly pressure-sensitive adhesive light transmissible pressure-sensitive adhesive body having different pressure-sensitive adhesive properties between the surface side and the back side and peeling selectivity in combination, and a light transmissible pressure-sensitive adhesive laminate obtained by laminating said highly pressure-sensitive adhesive light transmissible pressure-sensitive adhesive body and a release film has been intensively demanded.

### CITATION LIST

### Patent Literatures

Patent Literature 1: JP-A-2006-290960
Patent Literature 2: JP-A-2003-176462

### SUMMARY OF INVENTION

### TECHNICAL PROBLEM

An object of the present invention is, considering the above-described problems, to provide a highly pressure-sensitive adhesive optical transparent pressure-sensitive adhesive body and optical transparent pressure-sensitive adhesive laminate which stably provide peeling site selectivity between both sides of the transparent pressure-sensitive adhesive body and a release film in the case of pasting, whereas stably and easily express peeling site selectivity between both sides of the transparent pressure-sensitive adhesive body in the case of rework, that is, re-pasting, as well as superior adhesion stability after pasting, and a method for producing the same.

### SOLUTION TO PROBLEM

The present inventor has intensively studied to solve the above-described problem. As a result, the inventor of the present invention have found that rework stability can be realized by providing a specified difference between both sides of a highly pressure-sensitive adhesive transparent pressure-sensitive adhesive sheet in peeling strength between the highly pressure-sensitive adhesive transparent pressure-sensitive adhesive sheet cured together with a release sheet and said release sheet, and further providing a specified difference between pressure-sensitive adhesive properties of both sides of the transparent pressure-sensitive adhesive sheet after peeling off the release sheet. In addition, the inventor of the present invention have studied various kinds of release treatment agents to realize stabilized light peeling property, and as a result, found that a specified combination of the highly pressure-sensitive adhesive transparent pressure-sensitive adhesive sheet and a specified release treatment agent, that is, a fatty acid type release treatment agent can realize a stable light peeling property to the highly pressure-sensitive adhesive transparent pressure-sensitive adhesive body. And the present invention was accomplished based on such knowledge. It should be noted that "highly pressure-sensitive adhesive" in the present invention means "a pressure-sensitive adhesive property in a ball number range of 5 to 32 in the tilt type ball tack test (tilt angle: 30 degrees) according to JIS Z0237".

That is, according to the first aspect of the present invention, there is provided an optical transparent pressure-sensitive adhesive body having pressure-sensitive adhesive surface (a) and pressure-sensitive adhesive surface (b) having different pressure-sensitive adhesive property, and each being formed with an addition reaction type silicone gel, **characterized in that** pressure-sensitive adhesive performance (Ga) of pressure-sensitive adhesive surface (a) and pressure-sensitive adhesive performance (Gb) of pressure-sensitive adhesive surface (b) satisfy a relationship of Ga < Gb, and both of pressure-sensitive adhesive performance (Ga) and pressure-sensitive adhesive performance (Gb) are 5 to 32 in ball number in the tilt type ball tack test (tilt angle: 30 degrees) according to JIS Z0237 and difference in ball umbers thereof is 2 to 12, and that pressure-sensitive adhesive surface (a) and pressure-sensitive adhesive surface (b) are formed by closely adhering uncured raw materials of said addition reaction type silicone gel to different release film (A) and release film (B) and thermal-curing, and each of the release film (A) and the release film (B) has a release treatment layer comprising a fatty acid amide type additive on said adhesion face.

In addition, according to the second aspect of the present invention, there is provided an optical transparent pressure-sensitive adhesive body having a pressure-sensitive adhesive surface (a) and a pressure-sensitive adhesive surface (b) having different pressure-sensitive adhesive property, and being formed with an addition reaction type silicone gel, **characterized in that** pressure-sensitive adhesive performance (Ga) of the pressure-sensitive adhesive surface (a) and pressure-sensitive adhesive performance (Gb) of the pressure-sensitive adhesive surface (b) satisfy a relationship of Ga < Gb, and both of pressure-sensitive adhesive performance (Ga) and pressure-sensitive adhesive performance (Gb) are 5 to 32 in ball number in the tilt type ball tack test (tilt angle: 30 degrees) according to JIS Z0237 and difference in ball umbers thereof is 2 to 12, and that the pressure-sensitive adhesive surface (a) is obtained by thermal-curing uncured raw materials of said addition reaction type silicone gel in contact with air, and the pressure-sensitive adhesive surface (b) is obtained by thermal-curing unhardened raw materials of said addition reaction type silicone gel in close contact with a release treatment layer of release film (B) having the release treatment layer comprising a fatty acid amide type additive at least on one side thereof.

According to the third aspect of the present invention, there is provided the optical transparent pressure-sensitive adhesive body according to the first aspect or the second aspect, **characterized in that** said fatty acid amide type additive is at least one kind of bisamide selected from saturated fatty acid bisamide and unsaturated fatty acid bisamide.
Further, according to the forth aspect of the present invention, there is provided the optical transparent pressure-sensitive adhesive body according to the third aspect, **characterized in that** said release treatment layer comprises a bisamide and a resin component as main components, and that content of the bisamide is 2 to 4% by weight based on total amount of release treatment layer.

According to fifth aspect of the present invention, there is provided the optical transparent pressure-sensitive adhesive body according to the first aspect or the second aspect, **characterized in that** peeling strength (F2) between said release film (B) and pressure-sensitive adhesive surface (b) is 0.5 N/20 mm or less of 90 degrees peeling pressure-sensitive adhesive force in pressure-sensitive adhesive force test according to JIS Z0237.
In addition, according to the sixth aspect of the present invention, there is provided the optical transparent pressure-sensitive adhesive body according to claim 1 or 2, **characterized in that** peeling strength (F1) between release film (A) and pressure-sensitive adhesive surface (a), peeling strength (F2) between release film (B) and pressure-sensitive adhesive surface (b), peeling strength (F3) between pressure-sensitive adhesive surface (a) and adherend (C) satisfy the following relationships:
difference in 90 degrees peeling pressure-sensitive adhesive forces in pressure-sensitive adhesive force test according to JIS Z0237 between peeling strength (F1) and peeling strength (F2) is 0.01 to 0.5 N/20 mm; and
difference in 90 degrees peeling pressure-sensitive adhesive forces between peeling strength (F2) and peeling strength (F3) is 0.1 N/20 mm or more.

In addition, according to the seventh aspect of the present invention, there is provided the optical transparent pressure-sensitive adhesive body according to the first aspect or the second aspect, **characterized in that** said silicone gel has a hardness of 0 to 30 in Asker C hardness according to SRIS 0101 Standard, or 20 to 200 in penetration (25°C) according to JIS K2207.
Furthermore, according to the eighth aspect of the present invention, there is provided the optical transparent pressure-sensitive adhesive body according to the first aspect or the second aspect, **characterized in that** transmittance of said silicone gel is 80% or more in a wavelength range of 380 to 780 nm.

In addition, according to the ninth aspect of the present invention, there is provided an optical transparent pressure-sensitive adhesive laminate, **characterized in that** release film (A) and release film (B) are laminated on pressure-sensitive adhesive surface (a) and pressure-sensitive adhesive surface (b) of the optical transparent pressure-sensitive adhesive body according to the first aspect or the second aspect, respectively.
Further, according to the tenth aspect of the present invention, there is provided an optical transparent pressure-sensitive adhesive laminate, **characterized in that** release film (B) is laminated on pressure-sensitive adhesive surface (b) of the optical transparent pressure-sensitive adhesive body according to the second aspect, and the back side of release film (B) is in contact with pressure-sensitive adhesive surface (a) and is laminated in a roll-shape.

On the other hand, according to the eleventh aspect of the present invention, there is provided a method for producing the optical transparent pressure-sensitive adhesive laminate according to the ninth aspect, **characterized in that** the method comprises a forming step in which uncured liquid addition reaction type silicone gel raw materials are sandwiched by release film (A) and release film (B) and thickness thereof is set; a heating step in which the silicone gel raw materials are thermal-cured after the forming or concurrent with the forming; and a cooling step in which the cured silicone gel obtained in said heating step is cooled down together with release film (A) and release film (B), and that release film (A) and release film (B) are different from each other, and have a release treatment layer comprising a fatty acid amide type additive on the side facing to the addition reaction type silicone gel raw materials.
In addition, according to the twelfth aspect of the present invention, there is provided a method for producing the optical transparent pressure-sensitive adhesive laminate according to the ninth aspect, characterized by comprising the forming step in which uncured liquid addition reaction type silicone gel raw materials are fed on a release treatment layer of release film (B) having the release treatment layer comprising a fatty acid amide type additive at least on one side thereof, and thickness of the raw materials is set; the heating step in which said uncured silicone gel raw materials are thermal-cured while at least a part of the surface of said uncured silicone gel raw materials not contacting with release film (B) is in contact with air after the forming or concurrent with the forming; the cooling step in which the cured silicone gel obtained in said heating step is cooled down together with said release film (B); and the release film pasting step in which release film (A) is pasted to the thermal-cured face in contact with air in said heating step.
Furthermore, according to the thirteenth aspect of the present invention, there is provided a method for producing the optical transparent pressure-sensitive adhesive laminate according to the tenth aspect, characterized by comprising the forming step in which uncured liquid addition reaction type silicone gel raw materials are fed on a release treatment layer of release film (B) having the release treatment layer comprising a fatty acid amide type additive at least on one side thereof, and thickness of the raw materials is set; the heating step in which in which said uncured silicone gel raw materials are thermal-cured while at least a part of the surface of said uncured silicone gel raw materials not contacting with release film (B) is in contact with air after the forming or concurrent with the forming; the cooling step in which the cured silicone gel obtained in said heating step is cooled down together with said release film (B); and the take-up step in which the cured silicone gel is taken up together with release film (B) while pressure-sensitive adhesive surface (a) formed by curing in contact with air in said heating step is in contact with the back side of said release film (B).

In addition, according to the fourteenth aspect of the present invention, there is provided the method for producing the optical transparent pressure-sensitive adhesive laminate according to any one of the eleventh to the thirteenth aspects, **characterized in that** in said heating step, a heating temperature in the side where said uncured silicone gel raw materials are in contact with release film (A) or air and a heating temperature in the side where the raw material is in contact with release film (B) are different from each other.
Further, according to the fifteenth aspect of the present invention, there is provided the method for producing the optical transparent pressure-sensitive adhesive laminate according to any one of the eleventh to the thirteenth aspects, **characterized in that** in said cooling step, cooling rate gradients in the side where said cured silicone gel is in contact with release film (A) or air and the side where the silicone gel is in contact with release film (B) are different from each other.

As mentioned above, the present invention is related to an optical transparent pressure-sensitive adhesive body and an optical transparent pressure-sensitive adhesive laminate and the like, and preferable embodiments thereof include the followings.
(1) The optical transparent pressure-sensitive adhesive body according to the first or the second aspect, **characterized in that** peeling strength (F1) between release film (A) and pressure-sensitive adhesive surface (a), peeling strength (F2) between release film (B) and pressure-sensitive adhesive surface (b), peeling strength (F3) between pressure-sensitive adhesive surface (a) and adherend (C), and peeling strength (F4) between pressure-sensitive adhesive surface (b) and adherend (D) satisfy the relationship of F1 < F2<F3<F4,orF1<F2<F3>F4.
(2) The optical transparent pressure-sensitive adhesive body according to the first or the second aspect, **characterized in that** said peeling strength (F3) and peeling strength (F4) between pressure-sensitive adhesive surface (b) and adherend (D) satisfy the relationship that difference in 90 degrees peeling pressure-sensitive adhesive forces in pressure-sensitive adhesive force test according to JIS Z0237 between peeling strength (F3) and peeling strength (F4) is 0.1 N/20 mm or more.
(3) The optical transparent pressure-sensitive adhesive body according to the first or the second aspect, **characterized in that** release film (A) and/or release film (B) comprises 1.0 to 5.0% by weight of a fatty acid amide type additive instead of having a release treatment layer comprising a fatty acid amide type additive.
(4) The optical transparent pressure-sensitive adhesive body according to the fourth aspect, **characterized in that** said resin component is a copolyester.
(5) The method for producing the optical transparent pressure-sensitive adhesive laminate according to the eleventh aspect, **characterized in that** after the cooling step, the method further comprises peeling step in which release film (A) is peeled off from the cured silicone gel to make pressure-sensitive adhesive surface (a) exposed on the surface, and take-up step in which the cured silicone gel is taken up together with release film (B) in a roll-shape while pressure-sensitive adhesive surface (a) is in contact with the back side of release film (B).

### ADVANTAGEOUS EFFECTS OF THE INVENTION

Since the optical transparent pressure-sensitive adhesive body of the present invention has a superior selective peeling stability even in a high pressure-sensitive adhesive force range, compared with conventional optical pressure-sensitive adhesive body having different pressure-sensitive adhesive properties between the surface side and the back side, a superior tight adhesion property can be maintained even after pasting to an adherend such as image display devices, and hence a pasting own defect such as generation of air bubble or peeling-off after pasting can be remarkably reduced, and a superior selective peeling property can be stably realized even in the case of automated mounting on image display devices or the like. As a result, improvement in mass productivity, cost down, and quality assurance can be more ensured. In addition, hardness and pressure-sensitive adhesive property including the pressure-sensitive adhesive property range possessed by a conventional optical pressure-sensitive adhesive body having different pressure-sensitive adhesive properties between the surface side and the back side can be easily controlled, and quickly respond to a wide range of alterations of specification, while transparency of the transparent pressure-sensitive adhesive sheet is maintained. Further, since the optical transparent pressure-sensitive adhesive body of the present invention has selective peeling property in rework or recycling work, it can respond to workability in rework and recycle or automation, and can exhibit such effect as contributions to reduction in environmental load and cost down.
In addition, in the present invention, since, in particular, a release film applied with bisamide as a release treatment agent is excellent in heat resistance, a higher thermal-curing temperature can be used, and hence curing step can be shortened. As a result, the release film applied with bisamide can improve productivity of the optical pressure-sensitive adhesive body and can exhibit an effect to contribute to cost down of the optical pressure-sensitive adhesive body.
Further, the production method of the present invention is simple and easy, and efficient method with high productivity, because the method is composed of simple steps.

### BRIEF DESCRIPTION OF DRAWINGS

[Figure. 1]

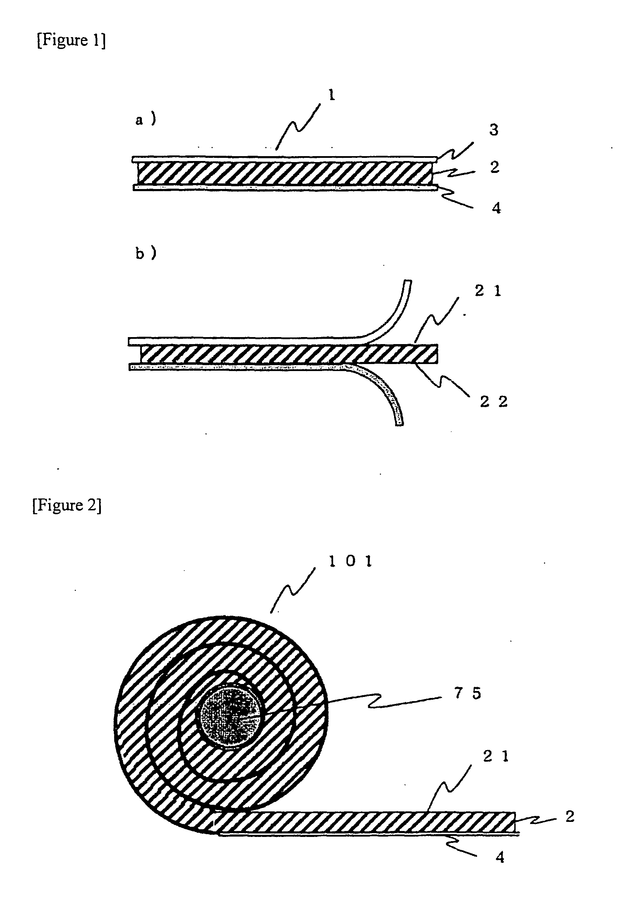

   Figure 1 is schematic diagrams illustrating the optical transparent pressure-sensitive adhesive body and the optical transparent pressure-sensitive adhesive laminate of the present invention. (a) is a schematic diagram (cross-sectional view) of the optical transparent pressure-sensitive adhesive laminate, and (b) is a schematic diagram (cross-sectional view) of a state in which a part of release film of the optical transparent pressure-sensitive adhesive laminate has been peeled off.
[Figure. 2]
   Figure 2 is another embodiment of the optical transparent pressure-sensitive adhesive body and the optical transparent pressure-sensitive adhesive laminate of the present invention.
[Figure 3]

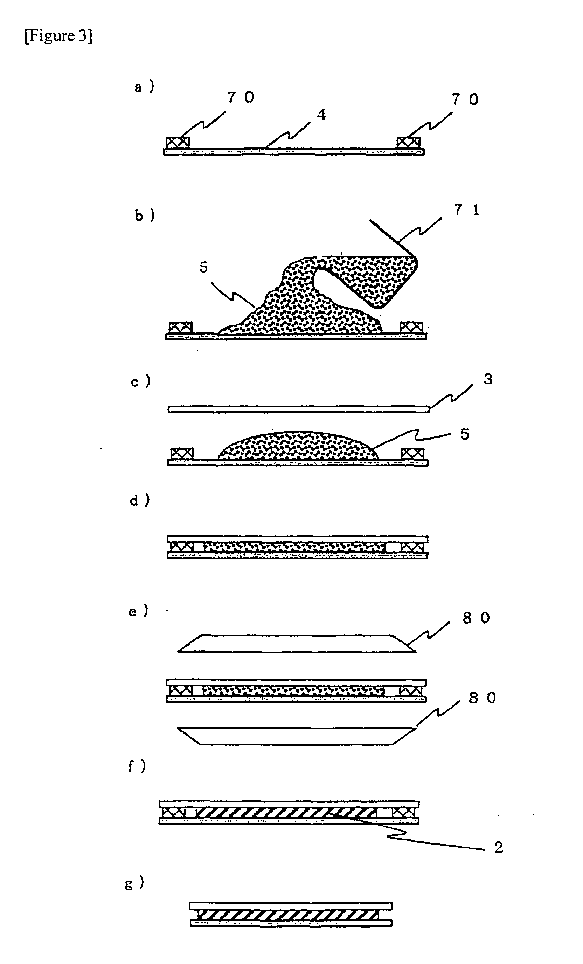

   Figure 3 is a schematic diagram illustrating manufacturing steps of the optical transparent pressure-sensitive adhesive body and the optical transparent pressure-sensitive adhesive laminate of the present invention. (a) is a drawing illustrating a setting step of release film (B) and mold, (b) is a drawing illustrating a filling step for uncured raw materials, (c) to (d) are drawings illustrating a molding step laminated the release film (A), (e) is a drawing illustrating a thermal-curing step, (f) is a drawing illustrating cooling step, and (g) is a drawing illustrating completion of the optical transparent pressure-sensitive adhesive laminate.
[Figure 4]

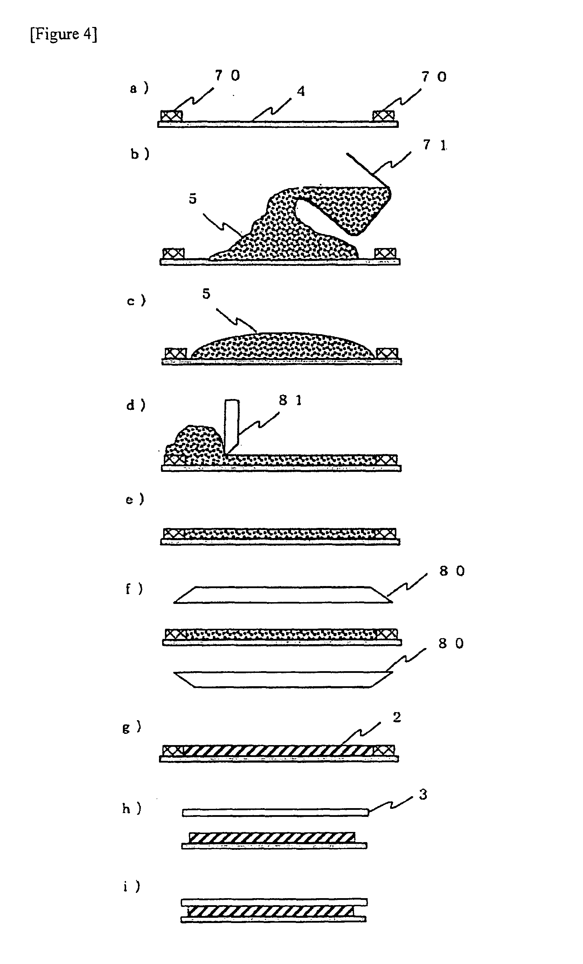

   Figure 4 is a schematic diagram illustrating another embodiment of production steps of the optical transparent pressure-sensitive adhesive body and the optical transparent pressure-sensitive adhesive laminate of the present invention. (a) is a drawing illustrating a setting step of release film (B) and mold, (b) is a drawing illustrating a filling step for uncured raw materials, (c) to (e) are drawings illustrating a forming step by squeegee, (f) is a drawing illustrating a thermal-curing step, and (g) is a drawing illustrating a cooling step; (h) is a drawing illustrating a pasting step for release film (A), and (i) is a drawing illustrating completion of the optical transparent pressure-sensitive adhesive laminate.
[Figure 5]

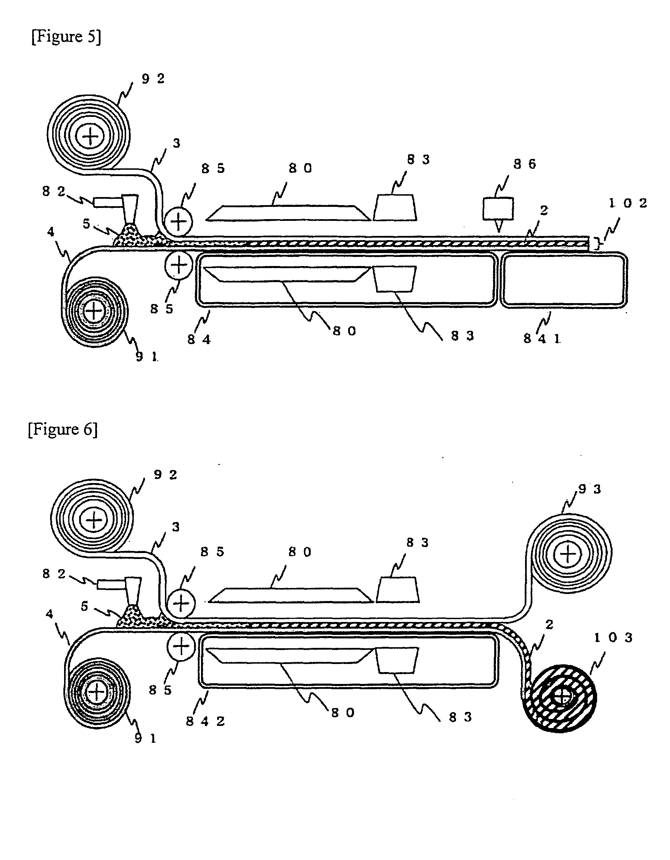

   Figure 5 is a schematic diagram illustrating a continuous production step for the optical transparent pressure-sensitive adhesive body and the optical transparent pressure-sensitive adhesive laminate of the present invention.
[Figure 6]
   Figure 6 is a schematic diagram illustrating another embodiment of continuous production step for the optical transparent pressure-sensitive adhesive body and the optical transparent pressure-sensitive adhesive laminate of the present invention.
[Figure 7]

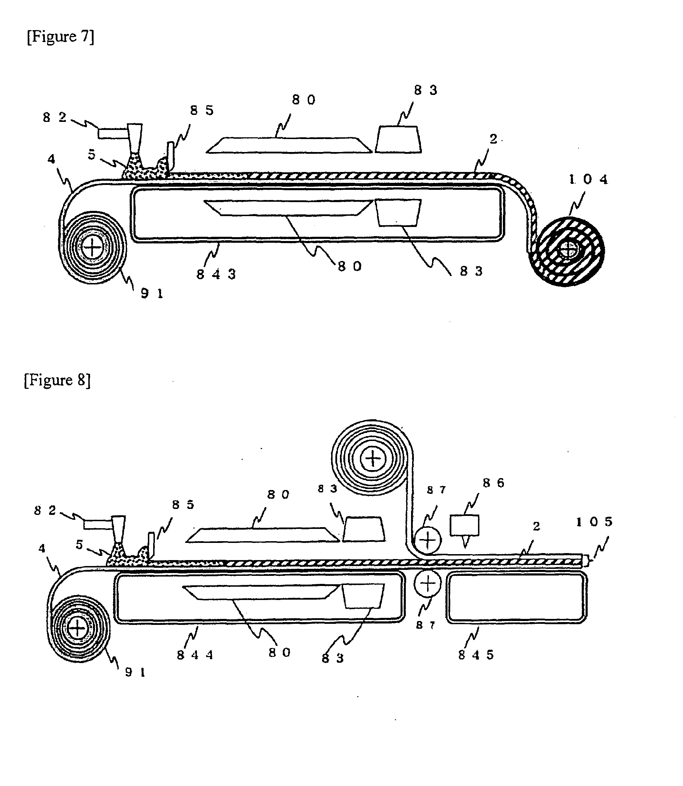

   Figure 7 is a schematic diagram illustrating another embodiment of continuous production step for the optical transparent pressure-sensitive adhesive body and the optical transparent pressure-sensitive adhesive laminate of the present invention.
[Figure 8]
   Figure 8 is a schematic diagram illustrating another embodiment of continuous production step for the optical transparent pressure-sensitive adhesive body and the optical transparent pressure-sensitive adhesive laminate of the present invention.
[Figure 9]

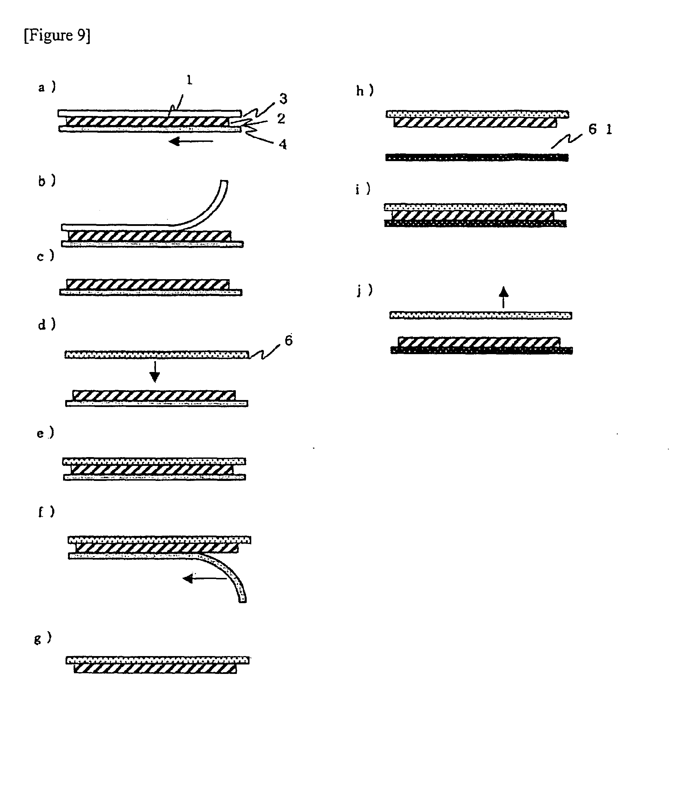

   Figure 9 is a schematic diagram illustrating the procedures of peeling stability test in Examples of the present invention. (a) to (c) are drawings illustrating an evaluation step (I), (d) to (g) are drawings illustrating an evaluation step (II), and (h) to (j) are drawings illustrating an evaluation step (III).
[Figure 10]

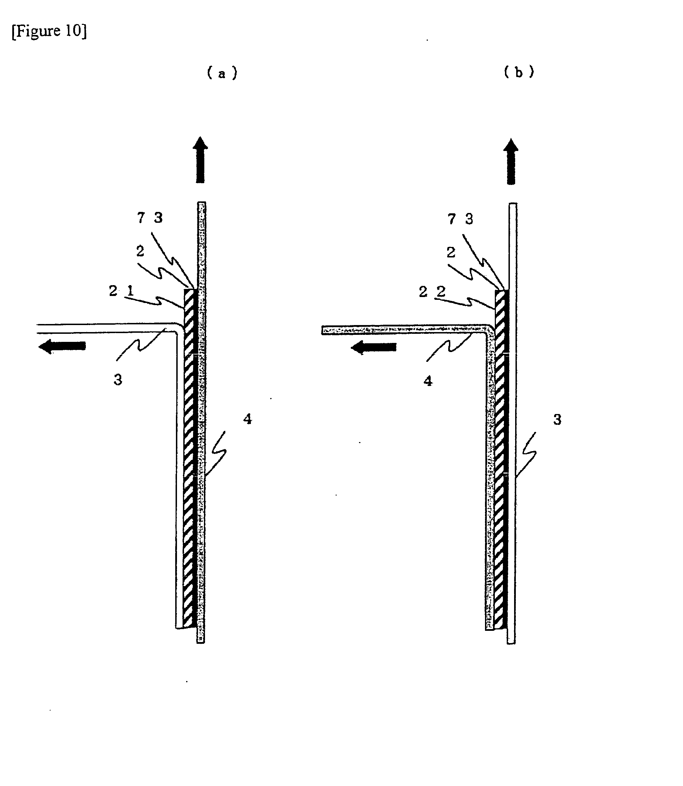

   Figure 10 is side views shown schematically illustrating a configuration of the test piece for peeling strength test to evaluate peeling strengths F 1 and F2 in Examples of the present invention. (a) is a configuration of the test piece for measurement of F1, and (b) is a configuration of the test piece for measurement of F2.
[Figure 11]

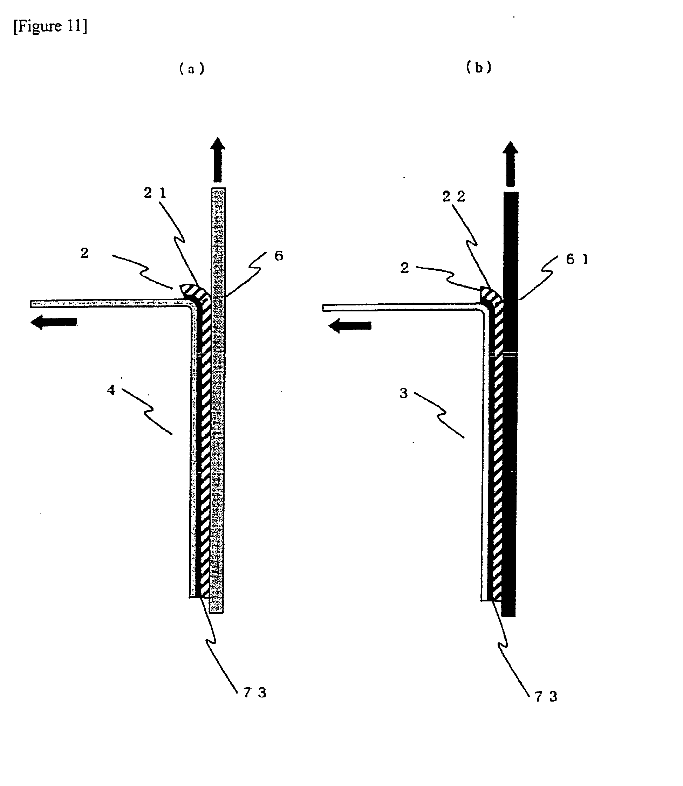

   Figure 11 is side views schematically showing a configuration of the test piece for peeling strength test to evaluate peeling strengths F3 and F4 in Examples of the present invention. (a) is a configuration of the test piece for measurement of F3, and (b) is a configuration of the test piece for measurement of F4.
[Figure 12]

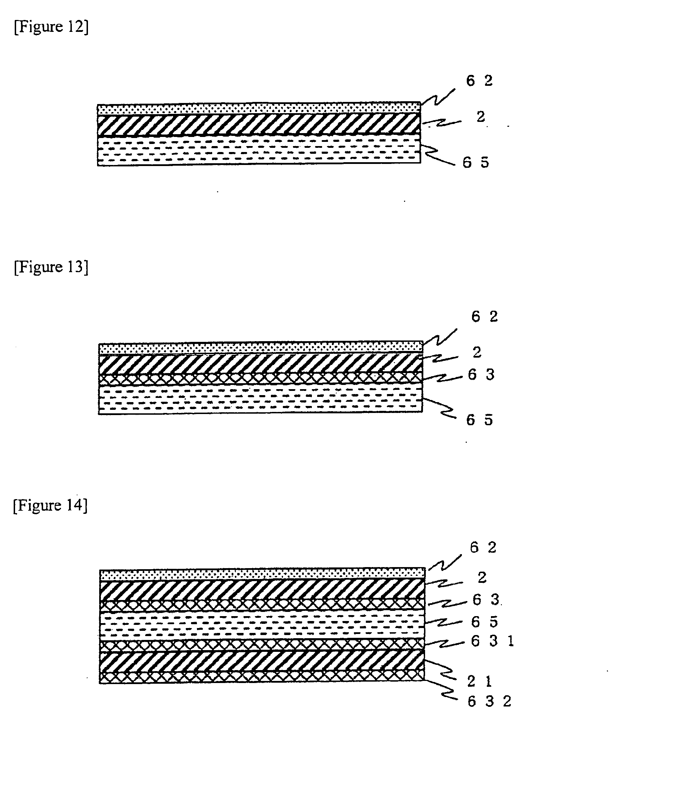

   Figure 12 is a schematic drawing (cross-sectional view) illustrating a configuration of image display device incorporated with the optical transparent pressure-sensitive adhesive body of the present invention.
[Figure 13]
   Figure 13 is a schematic drawing (cross-sectional view) illustrating a configuration of image display device incorporated with another embodiment of optical transparent pressure-sensitive adhesive body of the present invention.
[Figure 14]
   Figure 14 is a schematic drawing (cross-sectional view) illustrating a configuration of image display device incorporated with another embodiment of optical transparent pressure-sensitive adhesive body of the present invention.
[Figure 15]

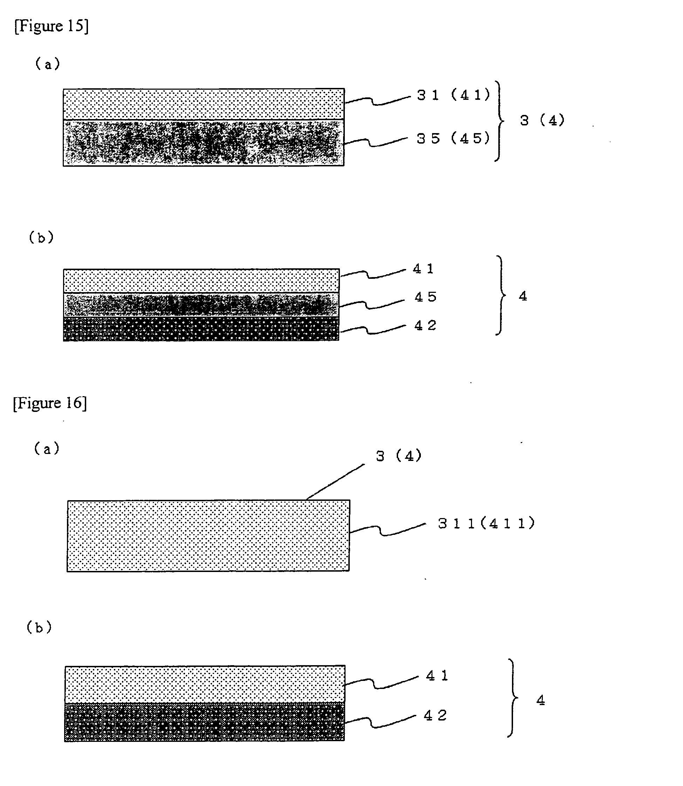

   Figure 15 is a schematic drawing illustrating an example of embodiment of a configuration of a release film to be used in the present invention. (a) is a configuration having a release treatment layer on one side, and (b) is a configuration having release treatment layers on both sides in release film (B).
[Figure 16]
   Figure 16 is a schematic drawing illustrating an example of another embodiment of a configuration of a release film to be used in the present invention. (a) is a configuration having a release treatment layer on one side, and (b) is a configuration having release treatment layers on both sides in release film (B).

### DESCRIPTION OF EMBODIMENTS

The optical transparent pressure-sensitive adhesive body of the present invention is used by being sandwiched in between two optical components as an intermediate layer in a light guiding pathway of an image display device.
In an assembly step for image display device or the like, the optical transparent pressure-sensitive adhesive body is handled as an optical transparent pressure-sensitive adhesive laminate in which release film (A) and release film (B) have been pasted to pressure-sensitive adhesive surface (a) and pressure-sensitive adhesive surface (b), respectively.
Further, in said assembly step, in order to join two optical components (for example, adherend (C), adherend (D)) with the optical transparent pressure-sensitive adhesive body, the following procedures are carried out:
(I) firstly, release film (A) is peeled off from said optical transparent pressure-sensitive adhesive laminate to make pressure-sensitive adhesive surface (a) exposed on the surface;
(II) then, adherend (C) is pasted to said pressure-sensitive adhesive surface (a);
(III) subsequently, release film (B) is peeled off from said optical transparent pressure-sensitive adhesive laminate to make pressure-sensitive adhesive surface (b) exposed on the surface, without peeling adherend (C) from pressure-sensitive adhesive surface (a);
(IV) and, adherend (D) is pasted to said pressure-sensitive adhesive surface (b).

Further, when incorrect pasting (for example, improper positioning, foreign matter contamination, and the like) is found after adherend (C) and adherend (D) are joined together with an optical transparent pressure-sensitive adhesive body, in solving the incorrect pasting by peeling the adherend from the optical transparent pressure-sensitive adhesive body, rework can be carried out in a rational manner and mechanization of the works is realized by:
(V) peeling off any one of adherend (C) and adherend (D) selectively and stably from the optical transparent pressure-sensitive adhesive body.
In order to realize certainly the above-described procedures (I) to (V), peeling strength (F1) between release film (A) and pressure-sensitive adhesive surface (a), peeling strength (F2) between release film (B) and pressure-sensitive adhesive surface (c), peeling strength (F3) between pressure-sensitive adhesive surface (a) and adherend (C), and peeling strength (F4) between pressure-sensitive adhesive surface (b) and adherend (D) becomes necessary to satisfy the relationship of F1 < F2 < F3 < F4, or F1 < F2 < F3 > F4.

In order to realize stably the relationships of said peeling forces or peeling strengths, the optical transparent pressure-sensitive adhesive body of the present invention is an optical transparent pressure-sensitive adhesive body having pressure-sensitive adhesive surface (a) and pressure-sensitive adhesive surface (b) having different pressure-sensitive adhesive property, and each being formed with an addition reaction type silicone gel, **characterized in that** pressure-sensitive adhesive performance (Ga) of pressure-sensitive adhesive surface (a) and pressure-sensitive adhesive performance (Gb) of pressure-sensitive adhesive surface (b) satisfy a relationship of Ga < Gb, and both of pressure-sensitive adhesive performance (Ga) and pressure-sensitive adhesive performance (Gb) are 5 to 32 in ball number in the tilt type ball tack test (tilt angle: 30 degrees) according to JIS Z0237 and difference in ball numbers thereof is 2 to 12. In addition, the optical transparent pressure-sensitive adhesive body of the present invention is, as the first aspect, **characterized in that** pressure-sensitive adhesive surface (a) and pressure-sensitive adhesive surface (b) are formed by tightly adhering the uncured raw materials of an addition reaction type silicone gel to different (that is, not identical) release film (A) and release film (B) and thermal-curing, and release film (A) and release film (B) has a release treatment layer comprising a fatty acid amide type additive on said tight-adhesion surface. Alternatively, the optical transparent pressure-sensitive adhesive body of the present invention is, as the second aspect, **characterized in that** pressure-sensitive adhesive surface (a) is obtained by thermal-curing the uncured raw materials of said addition reaction type silicone gel in contact with air, and the pressure-sensitive adhesive surface (b) is obtained by thermal-curing the uncured raw materials of said addition reaction type silicone gel in close contact with a release treatment layer of release film (B) having the release treatment layer comprising a fatty acid amide type additive at least on one side thereof. In particular, the optical transparent pressure-sensitive adhesive body of the present invention is superior in automation responsiveness because selective separation of adherend in rework is improved which has not been considered in the conventional technologies.
Hereinafter, the optical transparent pressure-sensitive adhesive body and the optical transparent pressure-sensitive adhesive laminate of the present invention, and method for producing for the same will be explained in detail.

### 1. Optical transparent pressure-sensitive adhesive body

### (i) Addition reaction type silicone gel

The optical transparent pressure-sensitive adhesive body of the present invention is formed from an addition reaction type silicone gel having pressure-sensitive adhesive property.
Hardness of the above-described silicone gel is desirably 0 to 30 in Asker C hardness according to SRIS 0101 Standard, or 20 to 200 in penetration (25°C) according to JIS K2207 "Petroleum asphalt".

In addition, in the present invention, "transparent" includes the meanings of "colorless and transparent", "colored and transparent", and "translucent", and total light transmittance of visible light (according to JIS K7105, "Optical characteristics test methods for plastics") in the wavelength range of 380 to 780 nm of the silicone gel to be used in the present invention is preferably 80% or more, more preferably 85% or more, and particularly preferably 90% or more.
Transmittance is an index representing a degree of transparency of a transparent member, and when transmittance is less than 80%, for example, visibility is deteriorated because light emitted from a screen becomes difficult to transmit the transparent member. In addition, it is not preferable that a wave range in which transmittance is 80% or more is narrower than the range of 380 to 780 nm, because light transmission in red color side (higher wavelength side) or blue color side (lower wavelength side) is decreased. Transmittance is a value measured using a spectrophotometer or the like.

As the above-described addition reaction type silicone gel, a silicon compound can be used by selecting appropriately from those which are generally used as heretofore known and commercially available various types of silicone materials. Therefore, any type of thermal-curing type or cold setting type, condensed type or addition type in curing mechanism, and the like can be used, and a silicone gel obtained from an addition type silicone composition is particularly preferable. In addition, a group binding to silicon atom is not particularly limited, and includes, for example, an alkyl group such as a methyl group, an ethyl group, a propyl group, and the like; a cycloalkyl group such as a cyclopentyl group, a cyclohexyl group, and the like; an alkenyl group such as a vinyl group, an allyl group, and the like; an aryl group such as a phenyl group, a tolyl group, and the like; including those in which hydrogen atoms of these groups are partially substituted by other atom or linking group.

As a specific addition reaction type silicone material, trade name CF-5106 (penetration: 150) produced by Dow Corning Toray Co., Ltd. and the like are superior, and this silicone material is the one in which silicone resin as a raw materials are composed of liquid A and liquid B, and a silicone gel material having a desired penetration can be obtained by mixing these two liquids in a specified ratio and heating.

Production method of the addition reaction type (or cross-linked) silicone gel to be used in the present invention is not particularly limited, but the silicone gel can be obtained usually by using organohydrogenpolysiloxane and alkenylpolysiloxane which will be described later as raw materials, and subjecting both compounds to hydrosilylation reaction (addition reaction) in the presence of a catalyst. That is, in the present invention, raw materials of the silicone gel mean in most cases organohydrogenpolysiloxane and alkenylpolysiloxane. Organohydrogenpolysiloxane to be used as one of raw materials is preferably the one which is represented by the following general formula (1):

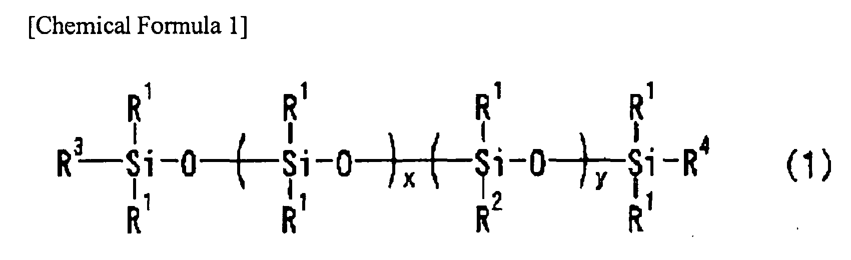

wherein R¹ represents an identical or different kind of substituted or unsubstituted monovalent hydrocarbon group; R², R³ and R⁴ represent R¹ or -H; at least two of R², R³ and R⁴ represent -H; x and y are each an integer indicating number of each unit; each unit is allocated in block or randomly, preferably randomly; x is an integer of 0 or more, preferably 10 to 30; and y is an integer of 0 or more, preferably 1 to 10. (x + y) is an integer of 5 to 300, preferably 30 to 200. Also, y/(x + y) is preferably in a range of ≤ 0.1, and when y/(x + y) exceeds this range, the transparent pressure-sensitive adhesive body of the present invention cannot be obtained due to too many cross-linking points.

An example of R¹ includes an alkyl group such as a methyl group, an ethyl group, propyl group, a butyl group, and the like; a cycloalkyl group such as a cyclopentyl group, a cyclohexyl group, and the like; an aryl group such as a phenyl group, a tolyl group, and the like; an aralkyl group such as a benzyl group, a phenylethyl group, and the like; or halogenated hydrocarbon in which hydrogen atoms of these compounds are partially substituted by chlorine atom, fluorine atom, or the like; and the like.

Hydrogen atom directly bound to silicon atom (Si-H) is necessary to carry out an addition reaction (hydrosilylation reaction) with an alkenyl group directly or indirectly bound to silicon atom, and at least two hydrogen atoms in an organohydrogenpolysiloxane molecule are necessary. Too small number of the hydrogen atom directly bound to silicon atom is not desirable, because silicone gel cannot be formed due to too small number of cross-linking point, showing same property as of silicone oil. On the other hand, too large number of the hydrogen atom directly bound to silicon atom is also not preferable due to too many number of cross-linking point, showing same property as of silicone rubber.

In addition, alkenylpolysiloxane which is another raw material to be used in production of cross-linked silicone gel according to the present invention is preferably the one which is represented by the following general formula (2):

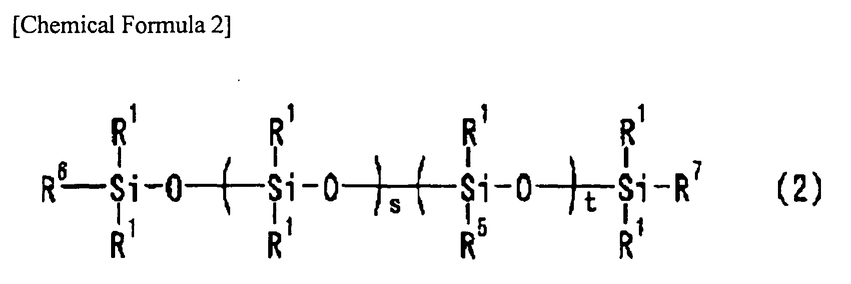

wherein R¹ represents an identical or different kind of substituted or unsubstituted monovalent hydrocarbon group; R⁵, R⁶ and R⁷ represent R¹ or an alkenyl group; at least two of R⁵, R⁶ and R⁷ represent an alkenyl group; s and t are each an integer indicating number of each unit; each unit is allocated in block or randomly, preferably randomly; s is an integer of 0 or more; and t is an integer of 0 or more; (s + t) is an integer of 10 to 600. And t/(s + t) is ≤ 0.1, and further, preferably in a range of ≤ 0.1. When t/(s + t) exceeds this range, the transparent pressure-sensitive adhesive body of the present invention cannot be obtained due to too many cross-linking points.

An example of R¹ includes an alkyl group such as a methyl group, an ethyl group, propyl group, a butyl group, and the like; a cycloalkyl group such as a cyclopentyl group, a cyclohexyl group, and the like; an aryl group such as a phenyl group, a tolyl group, and the like; an aralkyl group such as a benzyl group, a phenylethyl group, and the like; or halogenated hydrocarbon in which hydrogen atoms of these compounds are partially substituted by chlorine atom, fluorine atom, or the like; and the like.

An alkenyl group (a vinyl group, an allyl group, and the like) directly bound to silicon atom is necessary to carry out an addition reaction (hydrosilylation reaction) with hydrogen atom directly or indirectly bound to silicon atom (Si-H), and at least two alkenyl groups in an alkenylpolysiloxane molecule are necessary. Too small number of the alkenyl group is not desirable, because silicone gel cannot be formed because number of cross-linking point is too small, showing same property as of silicone oil. On the other hand, too large number of the alkenyl group is also not preferable, because number of cross-linking point is too large, showing same property as of silicone rubber.

In the present invention, since hydrogenpolysiloxane represented by the general formula (1) has -H (hydrogen group) directly bound to silicon atom, and alkenylpolysiloxane represented by the general formula (2) has a carbon-carbon double bond, the carbon-carbon double bond and -H (hydrogen group) cause an addition reaction, which is called as hydrosilylation reaction.

The above-described hydrosilylation reaction can be performed using a heretofore known technology. That is, this reaction is carried out in an organic solvent of alcohol group such as ethanol, isopropyl alcohol, and the like; aromatic hydrocarbon group such as toluene, xylene, and the like; ether group such as dioxane, THF, and the like; aliphatic hydrocarbon group; and chlorinated hydrocarbon group, or without solvent. In addition, reaction temperature is usually 50 to 150°C, and the reaction can be performed by using a catalyst such as chloroplatinic acid, a complex obtained from chloroplatinic acid and alcohol, platinum-olefin complex, platinum-vinylsiloxane complex, platinum-phosphorus complex, and the like. Amount of the catalyst to be used is generally 1 to 500 ppm of platinum atom based on alkenylpolysiloxane, and preferably 3 to 250 ppm of platinum atom in consideration of curing ability and physical properties of product after curing.

Said silicone gel has pressure-sensitive adhesive property derived from uncross-linked functional group on the surface, but those to which known pressure-sensitive adhesive providing method has been applied can be used, such as, for example, a silicone gel blended with a MQ type of pressure-sensitive adhesive providing component, and a silicone gel in which pressure-sensitive adhesive property is expressed by adding a non-reactive pressure-sensitive adhesive component or by adjusting side chain length of uncross-linked functional group or kind of terminal functional group.

In addition, the optical transparent pressure-sensitive adhesive body of the present invention has pressure-sensitive adhesive surface (a) and pressure-sensitive adhesive surface (b), each having different pressure-sensitive adhesive properties from each other.
Further, the optical transparent pressure-sensitive adhesive body of the present invention satisfies the following relationship.
That is, peeling strength (F1) between release film (A) and pressure-sensitive adhesive surface (a), peeling strength (F2) between release film (B) and pressure-sensitive adhesive surface (b), peeling strength (F3) between pressure-sensitive adhesive surface (a) and adherend (C), and peeling strength (F4) between pressure-sensitive adhesive surface (b) and adherend (D) satisfy the relationship of F1 < F2 < F3 < F4, or F1 < F2 < F3 > F4.

In the above-described relational formulas, it is desirable that difference in 90 degrees peeling pressure-sensitive adhesive forces in pressure-sensitive adhesive force test according to JIS Z0237 "Test method for pressure-sensitive adhesive tape and pressure-sensitive adhesive sheet" between peeling strength (F1) and peeling strength (F2) is 0.01 to 0.5 N/20 mm, and difference in 90 degrees peeling pressure-sensitive adhesive forces between peeling strength (F2) and peeling strength (F3) is 0.1 N/20 mm or more.
This is because the following reason, that is, if difference in peeling strength from an optical transparent pressure-sensitive adhesive body between two release films is less than the lower limit of the above-described range, it is not stably fixed which release film is releasing side when a release film is peeled off.
In addition, in the optical transparent pressure-sensitive adhesive body of the present invention, it is desirable that each of peeling strength (F1) between release film (A) tightly adhering to the both side and pressure-sensitive adhesive surface (a), and peeling strength (F2) between release film (B) and pressure-sensitive adhesive surface (b) is 0.5 N/20 mm or less. Peeling strength exceeding 0.5 N/20 mm is not preferable, because peeling workability (in particular, in automated process) becomes worsened because of too high peeling force when a release film is peeled off. In addition, extremely high peeling force is also not preferable because there is a possibility that the optical transparent pressure-sensitive adhesive body could be damaged.

In adjustment of the above-described peeling strength, it is essential requirement that pressure-sensitive adhesive performance (Ga) of pressure-sensitive adhesive surface (a) when release film (A) is peeled off and pressure-sensitive adhesive performance (Gb) of pressure-sensitive adhesive surface (b) when release film (B) is peeled off satisfy a relationship of Ga < Gb, and this relationship effectively works for stable and easy expression of peeling site selectivity between both sides of the transparent pressure-sensitive adhesive body, in a rework, that is, re-pasting, in which a transparent pressure-sensitive adhesive body is removed from an optical component which is an adherend.
Further, it is desirable that pressure-sensitive adhesive performance (Ga) and pressure-sensitive adhesive performance (Gb) are 5 to 32 in ball number in the tilt type ball tack test (tilt angle: 30 degrees) according to JIS Z0237 "Test method for pressure-sensitive adhesive tape and pressure-sensitive adhesive sheet" and difference in ball umbers between Ga and Gb is 2 to 12, and said difference in ball numbers is more preferably 2 to 5. If difference in pressure-sensitive adhesive performances is less than 2, it is not stably fixed which is a removed side from optical component, in a rework, that is, re-pasting, in which a transparent pressure-sensitive adhesive body is removed from an optical component which is an adherend. On the other hand, if difference in pressure-sensitive adhesive performances exceeds 12, there is a possibility that peeling of an optical component from pressure-sensitive adhesive surface (b) of the transparent pressure-sensitive adhesive body could become difficult and also production becomes difficult.

Said pressure-sensitive adhesive performance (Ga) and pressure-sensitive adhesive performance (Gb) are adjusted by a kind of material to which said uncured raw materials of silicone gel is in contact in a uncross-linked state before initiating curing.
As said material, release film (substrate material and release treatment layer are supposed to correspond), gas such as air, liquid such as wet coating layer applied to release film and the like are applied, but from the viewpoint of realizing a stable peeling performance, those are desirable which are not migrated to pressure-sensitive adhesive surface like release treatment agent (in other word, contamination of pressure-sensitive adhesive surface with release treatment agent), or are not diffused to or are not absorbed by said cured silicone gel with time. Combination of materials may be combination of same phases such as solid phase-solid phase, or combination of different phases such as solid phase-gas phase and solid phase-liquid phase. In the same phase, when Ga and Gb are expressed by contacting with different release films, the material having lower surface energy of a release film surface, with which the uncross-linked silicone gel materials contact, exhibits lower ball tack. In addition, as an example of solid phase-gas phase, when silicone materials are cross-linked by contacting with release film one side, the surface in contact with air exhibits lower ball tack.
Further, pressure-sensitive adhesive force or peeling strength caused thereby can be also adjusted by varying heat amount or irradiation amount of electromagnetic wave such as ultraviolet ray, which is an applied energy most affecting on cross-linking reaction which is a feature of the addition reaction type silicone gel.
In addition, by further providing a coating layer mainly composed of hydrogenpolysiloxane of a cross-linking agent on the side in contact with uncross-linked silicone gel raw materials of release film, degree of cross-linking on the surface of non-cross-linking silicone gel raw materials in contact with said coating layer may be adjusted.

In addition, in the conventional both-side pressure-sensitive adhesive type optical transparent pressure-sensitive adhesive tape, when thickness of pressure-sensitive adhesive body (part of pressure-sensitive adhesive layer removed the release material from both sides of both-side pressure-sensitive adhesive tape) is 100 µm or less, pressure-sensitive adhesive properties of the surface side and the back side of the pressure-sensitive adhesive layer is main and is not influenced by the thickness of pressure-sensitive adhesive body. However, as the thickness increases, tensile elastic deformation becomes easy to occur when adherend or release film is peeled off from the pressure-sensitive adhesive body. In particular, in the case of the pressure-sensitive adhesive body having viscoelasticity, there is a problem that peeling site stability becomes worse because peeling stress relaxation characteristic works.
However, in the optical transparent pressure-sensitive adhesive body of the present invention, peeling site stability is exerted, of course, in a thickness of several ten µm or more which is a thickness region for the conventional optical transparent pressure-sensitive adhesive tape, but peeling site stability is exerted even in a thickness region, in particular exceeding 100 µm, which is a thickness range where viscoelastic characteristic of the optical transparent pressure-sensitive adhesive body influences peeling strength.

Expression mechanism of the above-described different pressure-sensitive adhesive properties between the surface side and the back side, which is a feature of the present invention, is not clear at present, but it is speculated as follows. That is, in an interface formed by the contact of uncured silicone gel raw materials and material to be contacted such as release film, molecular state (surface energy) of the outmost surface of said material to be contacted, polarity (compatibility) of functional group or side chain of uncross-linked silicone gel, and the like interact each other to change difference of cross-linking structure or ratio of uncross-linked functional group in the vicinity of the interface, which is observed as a difference in pressure-sensitive adhesive property as a macroscopic phenomenon.
Also, in addition to said speculated expression mechanism of different pressure-sensitive adhesive properties, peeling strengths between release film and pressure-sensitive adhesive body is also speculated as follows. That is, corresponding to thermal history of heating and cooling receiving in the cross-linking and curing process, and interface residual stress caused by the thermal expansion and shrinkage history acts to increase adhesion strength in an interface (engaging action between release film and silicone gel). As a result, the interface residual stress is involved in difference peeling strengths.

Regarding said peeling strengths F1 and F2, a peeling strength peeled off in a state in which uncross-linked silicone gel raw materials have been cross-linked in contact with a release film is different from a peeling strength in a state in which after silicone gel raw materials are cross-linked as described above, the release film is once peeled off, and the same release film or another release film is re-pasted (called as post-pasting), and the peeling strength of the latter case becomes lower.
The reason of this difference is speculated as follows. That is, until an interface bonding structure formed during curing process in an interface between release film and uncross-linked silicone gel raw materials is broken by the first peeling, a constraint force acts in the interface. However, since an adhesive strength expressed by contact of the post-pasted release film and a pressure-sensitive adhesive surface (a or b) has no constraint force corresponding to forming said release breaking surface, peeling strength becomes lower than that in the first peeling.
Therefore, it is necessary that combination of the release films is optimized while balances with Ga and Gb are adjusted depending on said peeling type.

### (ii) Release film (A) and release film (B)

In the optical transparent pressure-sensitive adhesive body of the present invention, release film (A) and release film (B) are tightly adhered on the both sides thereof to construct an optical transparent pressure-sensitive adhesive laminate.
In the present invention, the release film defined as release film (A) and release film (B) means general release film such as release sheet, surface protective film, release paper, and the like which are generally used. This release film (A) and release film (B) is the one to adjust pressure-sensitive adhesive property of optical transparent pressure-sensitive adhesive body and protect the adhesive surface of the optical transparent pressure-sensitive adhesive body from dust in the forming process for the optical transparent pressure-sensitive adhesive body, and hence the release film must be peeled off when it is used.
In addition, the optical transparent pressure-sensitive adhesive body of the present invention has pressure-sensitive adhesive surface (a) tightly adhered to release film (A) and pressure-sensitive adhesive surface (b) tightly adhered to release film (B), and in order to satisfy said relationship of peeling strengths and relationship of pressure-sensitive adhesive properties, release film (A) and release film (B) corresponding to the aspects of the present invention are applied.
Specifically, in the first aspect of the present invention, both of release film (A) and release film (B) comprise a fatty acid amide type release treatment agent, which are desirably not identical to each other (that is, at least any one of the one having different kinds of fatty acid amide, the one containing the same fatty acid amide in different contents, and the one having different base material components (components other than release treatment agent)). In addition, in the second aspect of the present invention, release film (B) comprises fatty acid amide type release treatment agent as an essential component. On the other hand, since pressure-sensitive adhesive surface (a) to be tightly adhered is formed by thermal-curing uncross-linked raw materials of said addition reaction type silicone gel in contact with air, and the one satisfying the requirement of peeling strengths F1 and F2 according to the present invention can be applied, release film (A) to be re-pasted may contain or need not contain the fatty acid amide type release treatment agent, and the kind (material including main component and additive components) may be different from or identical to that of release film (B), and further may be identical to or different from release film (B).

In addition, as release film (A) and release film (B), a film with a release treatment layer being formed (a film having a release treatment layer) on the side in contact with uncross-linked raw materials of at least addition reaction type silicone gel of the base material for film, for example, as in Figure 15 (a), can be suitably used. In the eighth aspect of the present invention, it is preferable to use a film with release treatment layers being formed on the both sides thereof as in Figure 15 (b). By using a film with a release treatment layer being formed (a film having said release treatment layer), function and performance of a release treatment agent contained in the release treatment layer can be fully exerted.

Base material for such film includes plastic type base material film (synthetic resin film) such as polyester film (polyethylene terephthalate film, and the like), olefin type resin film (polyethylene film, polypropylene film, and the like), polyvinyl chloride film, polyimide film, polyamide film (nylon film), rayon film, and papers (wood free paper, Japanese paper, craft paper, glassine paper, synthetic paper, top coat paper, and the like), as well as multilayer film (composite of 2 to 3 layers) obtained by laminating or coextruding these materials, and the like. As base material for film, the one using plastic type base material film having a high transparency (in particular, polyethylene terephthalate) can be suitably used.

Release film (A) and release film (B) to be pasted on both sides of the optical transparent pressure-sensitive adhesive body of the present invention are **characterized in that** as the release treatment agent contained in the above-described release treatment layer, fatty acid amide type release treatment agent is particularly used. In addition, the release treatment agent of fatty acid amide type additive may be used alone or in combination of two or more kinds. It should be noted that, the film which is subjected to release treatment with release treatment agent is formed, for example, by the heretofore known forming method. For example, as a method providing a release treatment layer to a polyester film, a hereto fore known coating system such as reverse gravure coating, bar coating, die coating, and the like can be used. As for coating systems, examples are described in Yuji Harasaki, "Coating system", published by Maki-Shoten (1979). Also, a structure in which a film-like release treatment layer is laminated to a base material by coextrusion molding or lamination forming may be used.
In addition, thickness of release film (A) or release film (B) is preferably 1 to 300 µm, and more preferably 50 to 200 µm.

The fatty acid amide type additive to be used in the present invention includes, for example, saturated fatty acid amide and unsaturated fatty acid amide (hereinafter, abbreviated as monoamide), saturated fatty acid bisamide and unsaturated fatty acid bisamide (hereinafter, abbreviated as bisamide), and the like.
As examples of monoamide, a saturated fatty acid amide includes, for example, a palmitic acid amide, a stearic acid amide, a behenic acid amide, and the like; and an unsaturated fatty acid amide includes, for example, an oleic amide, an erucamide, and the like. In addition, as examples of bisamide, a saturated fatty acid bisamide includes, for example, a methylene-bis-stearic acid amide, an ethylene-bis-capric acid amide, an ethylene-bis-lauric acid amide, an ethylene-bis-palmitic acid amide, an ethylene-bis-stearic acid amide, an ethylene-bis-behenic acid amide, an ethylene-bis-arachidic acid amide, an ethylene-bis-lignoceric acid amide, a hexamethylene-bis-stearic acid amide, and the like; and an unsaturated fatty acid bisamide includes, for example, an ethylene-bis- oleic amide, a hexamethylene-bis-oleic amide, a N,N'-dioleyladipic acid amide, a N,N'-dioleylsebacic acid amide, and the like. In addition to these compounds, the amides include a N,N'-diheptadecyladipic acid amide, a N,N'-diheptadecylsebacid acid amide, a N,N'-diheptadecylterephthalic acid amide, a N,N'-diheneicosylterephthalic acid amide, and the like.

Among the above-described fatty acid amide type additives, from the viewpoints of attainment of the object of the present invention and heat resistance required when the optical transparent pressure-sensitive adhesive body is thermal-cured, preferable compound is a bisamide represented by the general formula (I).

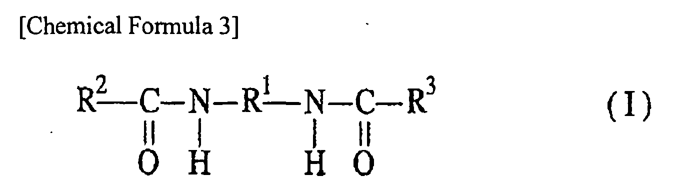

In the formula (I), R¹ represents a linear or branched alkylene chain having 1 to 12 carbon atoms, R² and R³ each represents a linear or branched alkyl group, alkenyl group, alkanyl group or hydroxyalkyl group having 3 to 23 carbon atoms (preferably 18 to 23 carbon atoms), and may be identical to or different from each other.

In addition, in said release treatment layer, a resin component other than the above-described release treatment agent is used as a base material or resin binder. Said resin component may be a homopolyester or a copolyester, and from the viewpoint of heat resistance of said resin component when optical transparent pressure-sensitive adhesive body is thermal-cured, copolyester is preferable.
Further, in the release treatment layer, content of the release treatment agent is set in a range where performance of the present invention such as pressure-sensitive adhesive force is expressed, but upper limit of the addition amount is set within a range where the desired pressure-sensitive adhesive force can be obtained by significant migration of the fatty acid amide type additive to the pressure-sensitive adhesive body. For example, when the fatty acid amide type additive is a bisamide, content of the bisamide is desirably 2 to 4% by weight, and also when the fatty acid amide type additive is a monoamide, content of the monoamide is desirably 2 to 4% by weight, based on the weight of the release treatment layer for both cases.

In addition, release film (A) and release film (B) can be regarded as non-identical one to each other (different one from each other) by varying the content of bisamide in this release treatment layer, even they are release films of same kinds. As a result, release film (A) and release film (B) can control or change peeling the strengths of respective adhered faces to pressure-sensitive adhesive surface (a) and pressure-sensitive adhesive surface (b), and can adjust properly the difference between peeling strengths of release films from optical transparent pressure-sensitive adhesive body, and are preferable.

Furthermore, in the release treatment layer, in addition to the above-described release treatment agent and the resin component as a base material, a particle may be blended mainly intending to provide, for example, easily sliding property, within a range where the gist of the present invention is not impaired. Kind of the particles to be blended is not particularly limited so long as the particles can provide easily sliding property, and specific example includes, for example, particles of silica, calcium carbonate, magnesium carbonate, barium carbonate, calcium sulfate, calcium phosphate, magnesium phosphate, kaolin, aluminium oxide, titanium oxide, and the like. In addition, release controlling agent may be used in combination to adjust peeling property of the release treatment layer and the like. Further, in addition to the above-described particles, heretofore known antioxidant, antistatic agent, thermal stabilizer, lubricant, dye, pigment, and the like can be added, if necessary.

Said homopolyester can be obtained by condensation polymerization of an aromatic dicarboxylic acid and an aliphatic glycol. Aromatic dicarboxylic acid includes a terephthalic acid, a 2,6-naphthalenedicarboxylic acid, and the like. Aliphatic glycol includes an ethylene glycol, a diethylene glycol, a 1,4-cyclohexanedimethanol, and the like. As a typical homopolyester, polyethylene terephthalate (PET), polyethylene 2,6-naphthalenedicarboxylate (PEN), and the like can be exemplified.
In addition, the above copolyester can be obtained by containing third component as a copolymerization component in the above-described homopolyester. Ratio of the third component is selected generally from a range of 30 mole% or less. A dicarboxylic acid component to be used in the copolyester other than the above includes an isophthalic acid, a phthalic acid, a 2,6-naphthalenedicarboxylic acid, an adipic acid, a sebacic acid, an oxy-carboxylic acid (for example, a p-oxybenzoic acid, and the like), and the like, and also a glycol component other than the above includes a propylene glycol, a butanediol, a 1,4-cyclohexanedimethanol, a neopentylglycol, and the like.
Further, as the above-described copolyester, modified polyester resin by graft polymerization with an organic resin such as an acrylic resin, a urethane resin, an epoxy resin and alkyd resin, and the like may be used within a range where the gist of the present invention is not impaired.

In addition, as another embodiment of release film (A) or release film (B) other than the above-described film with the release treatment layer being formed (the film having the release treatment layer), an embodiment in which the peeling film itself is release treatment layer as shown in Figure 16 (a), for example, a polyester film containing the above-described fatty acid amide type additive in polyester, can also be used. In addition, in the eighth aspect of the present invention, a film in which different release treatment layers are laminated as shown in Figure 16 (b) can be used.
As the polyester forming the above-described polyester film, said polyesters can be used.
In addition, amount of the fatty acid amide type additive to be added is set within a range where the performances of the present invention such as pressure-sensitive adhesive force are expressed, but upper limit of the addition amount is set within a range where the desired pressure-sensitive adhesive force can be obtained by significant migration of the fatty acid amide type additive to the pressure-sensitive adhesive body. For example, when the fatty acid amide type additive is bisamide, content of bisamide is preferably 1 to 5 % by weight based on the total amount of the release treatment layer. When addition amount is less than 1% by weight, the effect is insufficient, on the other hand, when addition amount exceeds 5% by weight, bisamide excessively elutes during thermal-curing. As a result, since the bisamide eluted on the cured gel surface migrates and a thin film of the migrated bisamide is formed, and pressure-sensitive adhesive property is remarkably reduced, it becomes difficult to obtain selective peeling stability. In addition, similarly, when the fatty acid amide type additive is monoamide, content is preferably 1 to 5% by weight.

In production of the above-described polyester film, timing when the fatty acid amide type additive is added is preferably a stage after production of polyester resin and before extrusion molding. For example, there is employed a method in which the additive is directly dispersed and mixed in a polyester resin before extrusion molding, or a method in which a high content of masterbatch resin is prepared in advance, mixed and diluted with the polyester polymer so that a desired concentration is obtained, and then subject to extrusion molding to make a film.
In addition, this fatty acid amide type additive may be distributed moderately unevenly on the surface of the polyester film. For example, said fatty acid amide type additive is preferably eluted (bleeds out) moderately by subjecting the film containing dispersed fatty acid amide type additive to heat treatment. For this, the film must be subjected to heat treatment. Heat treatment temperature is preferably 170 to 250°C. In this regard, however, extent of said elution of fatty acid amide type additive is preferably in an extent in which the additive does not migrate to the optical transparent pressure-sensitive adhesive body.

Further, in the present invention, release film (A) and release film (B) are not limited to the above-described materials, so long as containment of a fatty acid amide type additive as a release treatment agent is essential condition, and satisfy said relational formula of peeling strengths and relational formula of pressure-sensitive adhesive performances. For example, release film (A) or release film (B) includes a film consisting of an organic resin such as a polyether sulfon resin, a cellulose acetate resin, a polyimide resin, a polyether resin, an epoxy resin, a phenol resin, a polyamide resin, a polyolefin resin (for example, polypropylene), and the like; a film in which each of these organic resins is laminated with another organic resin; or a film in which each of these organic resins is coated on the surface of another organic resin film. When these materials are used as release film (A) or release film (B), moderate difference between peeling strengths of these release films from the optical transparent pressure-sensitive adhesive body can be obtained by using the films consisting of different kinds of materials from each other.
In addition, one sheet of release film may have functions of release film (A) and release film (B), by providing different peeling properties to the surface side and the back side of the release film by said laminated structure or surface treatment. In particular, when the release film is recovered in roll-shape which is one of production embodiments of said optical transparent pressure-sensitive adhesive laminate, this type of release film is effective.

### 2. Optical transparent pressure-sensitive adhesive laminate and production method thereof

The optical transparent pressure-sensitive adhesive laminate of the present invention is the one which is made by laminating release film (A) to pressure-sensitive adhesive surface (a) and laminating release film (B) to pressure-sensitive adhesive surface (b) of the above-described optical transparent pressure-sensitive adhesive body (see, for example, Figure 1). In addition, as another embodiment, the laminate of the present invention may be the laminated one in roll-shape in which release film (B) is laminated to pressure-sensitive adhesive surface (b) of the above-described optical transparent pressure-sensitive adhesive body with the back side of release film (B) being in contact with pressure-sensitive adhesive surface (a) (see, for example, Figure 2).
Further, the production method of the optical transparent pressure-sensitive adhesive laminate of the present invention desirably comprises the following steps.
That is, the production method comprises (i) a forming step in which uncured liquid viscoelastic materials are sandwiched by release film (A) and release film (B), and thickness thereof is set, (ii) a heating step in which the laminate is thermal-cured after forming or concurrently with forming, and (iii) a cooling step in which the cured sheet is cooled down.
It should be noted that , each of release film (A) and release film (B) has a release treatment layer comprising a fatty acid amide type additive, and the above-described release treatment layer side of the release film is in contact with uncured liquid silicone gel raw materials (not only in the embodiment of this production method, but also in the embodiment of another production method mentioned below, the uncured liquid silicone gel raw materials should be in contact with the release treatment layer side of the release film).

In the above-described forming step (i), uncured liquid silicone gel raw materials are sandwiched by release film (A) and release film (B) to make said uncured materials contact with a part of or the whole area of each of said release film, and then the thickness of silicone gel is set at the desired one by applying pressure to one or both of release film (A) and release film (B). In this case, in each of said release film (A) and release film (B), the surface (hereinafter, referred to as controlled pressure-sensitive adhesive surface) in which pressure-sensitive adhesive property of the silicone gel after curing and peeling strength are expressed, is contacted with the silicone gel materials. Method for sandwiching said liquid silicone gel raw materials by release film (A) and release film (B) and method for setting the thickness are not particularly limited, and pressing system, calendering system, or the like can be applied. In addition, as for heating method, heretofore known heating method can be applied. Furthermore, as for cooling step, natural cooling may be used or heretofore known cooling equipment such as blowing cold air or the like can be applied.
Not only in the embodiment of this production method, but also in the embodiment of another production method mentioned below, heating temperature is preferably 70 to 100°C. As the heating temperature becomes higher (as the time until completion of curing becomes shorter), pressure-sensitive adhesive property can be adjusted at higher level. In addition, heating temperature lower than 70°C is not preferable, because when the temperature is lower than 70°C, not only curing time becomes longer and desired pressure-sensitive adhesive property becomes impossible to obtain, but also productivity is lowered. On the other hand, heating temperature exceeding 100°C is also not preferable, because defect caused by thermal deformation of the release film tends to occur.
Each of the above-described steps (i) to (iii) may be carried out either in a batch system (see, for example, Figure 3), or in a continuous system (see, for example, Figure 5).

In addition, another embodiment of the method for producing for the optical transparent pressure-sensitive adhesive laminate of the present invention desirably comprises the following steps.
That is, another embodiment of the production method comprises (i) a forming step in which uncured liquid viscoelastic materials are fed on release film (B) having a release treatment layer comprising a fatty acid amide type additive, and thickness thereof is set, (ii) a heating step in which at least a part to which release film (A) is pasted is opened and thermal-cured after forming or concurrently with forming, (iii) a cooling step in which the cured sheet obtained in said thermal-curing step is cooled down, and (iv) a release film pasting step in which release film (A) is pasted to the thermal-cured face in an open state in said heating step.

In said (i) forming step, uncured liquid silicone gel raw materials are fed on release film (B) to form an uncured layer so that thickness thereof becomes nearly uniform. As for method for setting thickness, heretofore known coating method can be appropriately applied. For example, as a method superior in mass productivity, blade type coater and the like can be applied.
Each of the steps of the above-described (i) to (iii) may be carried out in batch system (see, for example, Figure 4) or in continuous system. In addition, as exemplified in Figure 8, release film pasting step (iv) may be carried out by roll system in which release film (A) is continuously fed. In addition, as another method, after cutting a cooled down sheet in a predetermined sheet, release film may be pasted thereto.
It should be noted that, as for release film (A) in step (iv), the same film as release film (B) may be used so long as peeling strength satisfies F1 < peeling strength F2 and their difference is 0.01 to 0.5 N/20 mm.

Further, another embodiment of the method for producing for the optical transparent pressure-sensitive adhesive laminate of the present invention desirably comprises the following steps.
That is, another embodiment of the production method comprises (i) a forming step in which uncured liquid addition reaction type silicone gel raw materials are fed on release film (B) having a release treatment layer comprising a fatty acid amide type additive, and thickness thereof is set, (ii) a heating step in which at least a part of the surface of said uncured silicone gel raw materials which is not in contact with said release film (B) is thermal-cured in contact with air after forming or concurrently with forming, (iii) a cooling step in which the cured silicone gel obtained in said thermal-curing step is cooled down together with release film (B), and (iv) a take-up step in which said cured silicone gel is taken up together with release film (B) while pressure-sensitive adhesive surface (a) which is formed by curing in contact with air in said heating step is in contact with the back side of release film (B) (see, for example, Figure 7).

In the above-described take-up step, pressure-sensitive adhesive surface (a) in the tip end of the cured sheet prepared is tightly adhered to a core material made of resin or the like, and then the cured sheet is taken up without occurrence of wrinkling or entraining of air. Take-up method is not particularly limited, but a method using a roll take-up machine with tension adjustment is preferable due to superior mass productivity. In addition, as the prepared optical pressure-sensitive adhesive body becomes softer, thickness of the optical transparent pressure-sensitive adhesive body tends to be more deformed by compressive stress, therefore, defect in taking up can be prevented by properly adjusting take-up speed and take-up tension. In addition, by applying same or different release treatment as/from release film (B) on the back side of release film (B), a difference can be given between peeling strengths from pressure-sensitive adhesive surface (a) and an adhered face on the back side of release film (B). In said treatment on the back side, it is suitable that peeling strength from the back side is made lower release than the surface side of release film (B), for example, by changing content of the fatty acid amide type additive.

Further, another embodiment of the method for producing for the optical transparent pressure-sensitive adhesive laminate of the present invention desirably comprises the following steps.
That is, another embodiment of the production method comprises (i) a forming step in which uncured liquid addition reaction type silicone gel raw materials are sandwiched by release film (A) and release film (B) both having a release treatment layer comprising a fatty acid amide type additive, and thickness thereof is set, (ii) a heating step in which the silicone gel raw materials are thermal-cured after forming or concurrent with forming, (iii) a cooling step in which the cured silicone gel obtained in said heating and curing step is cooled down together with release film (A) and release film (B), (iv) a peeling step in which release film (A) is peeled off from the cured silicone gel to make pressure-sensitive adhesive surface (a) exposed on the surface, and (v) a take-up step in which said cured silicone gel is taken up together with release film (B) in roll-shape while pressure-sensitive adhesive surface (a) is in contact with the back side of release film (B) (see, for example, Figure 8).

In addition, in the heating step in each embodiment of the above-described production methods, by curing the silicone gel raw materials at different heating temperatures for release film (A) side and release film (B) side, pressure-sensitive adhesive performances Ga and Gb may be subsidiarily adjusted to be different from each other. Pressure-sensitive adhesive performance of the higher temperature side becomes lower. Difference in heating temperatures between release film (A) side and release film (B) side varies depending on kinds of the silicone raw materials and release film (coefficient of thermal expansion and heat resistance), but is preferably 10 to 50°C, and more preferably 10 to 30°C. In addition, from the viewpoint of securement of thickness accuracy, it is preferably to set the heating temperature for the lower side against the gravity to keep hardness of the side higher by curing.

Further, in the cooling step in each embodiment of the above-described production methods, by cooling release film (A) side and release film (B) side at different cooling rate gradients from each other, an interface tight adhesion structure (for example, tight adhesion/biting effect of silicone gel to release film and the like) caused by a balance between cooling / shrinkage speed of the silicone gel and cooling / shrinkage speed of the release films. This structure is effective in the case of the optical transparent pressure-sensitive adhesive body which is used to utilize mainly peeling strength in the initial peeling. Method for controlling cooling rate is not particularly limited, and blowing system using blower and the like or cooling plate contact system are used.

In addition, in the heating step in each embodiment of the above-described production methods, by curing release film (A) side and release film (B) side at different heating temperatures from each other, pressure-sensitive adhesive performances Ga and Gb can be adjusted so as to be different from each other. Pressure-sensitive adhesive performance in the side of higher heating temperature becomes lower. Difference in heating temperatures of release film (A) side and release film (B) side varies depending on kind of silicone raw materials and kind of release film (coefficient of thermal expansion and heat resistance), but is preferably 10 to 50°C, and more preferably 10 to 30°C. Further, from the viewpoint of securement of thickness accuracy, it is preferably to set the heating temperature for the lower side against the gravity to keep hardness of the side higher by curing.

Further, in the cooling step in each embodiment of the above-described production methods, by cooling release film (A) side and release film (B) side at different cooling rate gradients from each other, an interface tight adhesion structure (for example, tight adhesion/biting effect of silicone gel to release film and the like) caused by a balance between cooling / shrinkage speed of the silicone gel and cooling / shrinkage speed of the release films. This structure is effective in the case of the optical transparent pressure-sensitive adhesive body which is used to utilize mainly peeling strength in the initial peeling. Method for controlling cooling rate is not particularly limited, and blowing system using blower and the like or cooling plate contact system are used.

### 3. Use of the optical transparent pressure-sensitive adhesive body

The optical transparent pressure-sensitive adhesive body of the present invention is used, for example, between an image display device and a transparent protective panel. Examples of combination of adherend (C) and adherend (D) include, in the case of liquid crystal display of cellular telephone, protective panel made of resin such as acrylic and glass surface of liquid crystal panel (see, for example, Figure 11), or said protective panel and polarizing sheet made of resin such as TAC (see, for example, Figure 12), or further application between said polarizing sheets (see, for example, Figure 13). Aside from these, in the case of plasma display panel (PDP) and organic EL type display, the optical transparent pressure-sensitive adhesive body of the present invention can be applied to fill up the space between each light emitting element surface and protective panel in the front surface. Alternatively, the optical transparent pressure-sensitive adhesive body of the present invention can be applied to a space causing light scattering as an optical junction spacer, to reduce transmission loss in an optical path of optical system. Thickness is set depending on applications, but, for example, in the case of the above-described applications to displays, a thickness of 0.1 to 5.0 mm, and preferably 0.2 to 2.0 mm is suitable because impact buffering property can be also provided.

### EXAMPLES

Hereinafter, the present invention will be more specifically explained using Examples, however, the present invention is not particularly limited to these Examples.

### [Example 1]

An optical transparent pressure-sensitive adhesive laminate of 200 mm × 200 mm × thickness 2.0 mm laminated with release film (A), an optical transparent pressure-sensitive adhesive body and release film (B) in this order was obtained through (i) a forming step in which uncured liquid viscoelastic materials were sandwiched by release film (A) and release film (B), and thickness thereof is set, (ii) a heating step being subjected to thermal-curing after forming, and (iii) a cooling step in which the cured sheet was cooled down.
As the uncured liquid silicone gel raw materials, two-component addition reaction type silicone gel produced by Wacker Asahikasei Silicone Co., Ltd. (Type: SLJ 3363, light transmission in air: 90%) was used by blending Liquid A (base resin + cross-linking catalyst) / Liquid B (base resin + cross-linking agent) = 55 parts by weight / 45 parts by weight.
Release film (A) having a structure in which a release treatment layer had been formed on one side of a base material sheet was obtained by coextruding polyethylene terephthalate resin (I) of a base material sheet and polyethylene terephthalate resin (II) of a release treatment layer in which ethylene-bis-oleic acid amide (produced by NOF Corp., "ALFLOW AD-281 ", hereinafter, same as above) was kneaded and dispersed in a content of 4% by weight based on total weight of the release treatment layer. Thickness of release film (A) prepared was 60 µm, and thickness of release treatment layer thereof was 30 µm. In addition, for both of said polyethylene terephthalate resin (I) and polyethylene terephthalate resin (II), the same resin to "Lumilar" produced by Toray Industries Inc. was used.
Further, release film (B) to be used was obtained by forming release treatment layer in the same way as in release film (A) except that addition amount of ethylene-bis-oleic acid amide was 3% by weight.

As for procedures of forming step, release film (B) was placed on a flat glass substrate releasing action side up, and further, spacers having a thickness of 2.0 mm were placed in four corners of release film (B) as female mold for forming. The uncured liquid silicone gel raw materials after mixing two liquids and defoaming were casted in the central part of release film (B) without entraining air bubble, thereafter covered with release film (A) with releasing function side thereof in contact with said liquid silicone gel raw materials surface without entraining air bubble. Subsequently, a flat glass plate was put down on the release film as an upper press mold, and pressed down manually to form the laminate into a thickness of the spacers.
Subsequently, said silicone gel raw materials were thermal-cured in a hot air type oven at 75°C for 1 hour together with the glass plate mold in said forming step. After that, the laminate was taken out from oven, the glass substrate was removed, and the optical transparent pressure-sensitive adhesive laminate was naturally cooled down on a wooden plate at room temperature (25°C).

### [Example 2]

A sheet-like optical transparent pressure-sensitive adhesive laminate was obtained in the same way as in Example 1, except that as the uncured liquid silicone gel raw materials, two-component addition reaction type silicone gel produced by Wacker Asahikasei Silicone Co., Ltd. (Type: SLJ 3363, light transmission in air: 90%) was used by blending Liquid A (base resin + cross-linking catalyst) / Liquid B (base resin + cross-linking agent) = 52 parts by weight / 48 parts by weight, and addition amounts of ethylene-bis-oleic acid amide for release film (A) and release film (B) were 3% by weight and 2% by weight, respectively.

### [Example 3]

An optical transparent pressure-sensitive adhesive laminate of 200 mm × 200 mm × thickness 2.0 mm laminated with release film (A), an optical transparent pressure-sensitive adhesive body and release film (B) in this order was obtained through (i) a forming step in which uncured liquid viscoelastic materials were fed on release film (B), and thickness thereof is set, (ii) a heating step in which the uncured liquid viscoelastic materials were thermal-cured in an open state after forming without pasting release film (A), (iii) a cooling step in which the cured sheet obtained in said thermal-curing step was cooled down, and (iv) a release film pasting step in which release film (A) was pasted to the thermal-cured face in an open state in said heating step.
In addition, setting of thickness in forming step (i) was carried out by the following method. That is, release film (B) was laid on a flat glass substrate releasing action side up, and further, a frame type of spacer made of aluminium having an inner dimension of 200 mm × 200 mm × thickness 2.0 mm was placed on release film (B). The uncured liquid silicone gel raw materials were casted in the whole area within said mold form, thereafter an excess uncured silicone gel raw materials were removed by squeegeeing with a squeegee plate along the upper surface of the mold form.
Subsequently, the uncured silicone gel raw materials were thermal-cured and cooled down under the same conditions as in Example 1 in a state in which the squeegee surface was in contact with air, and after the mold form was removed, release film (B) was pasted to the cured surface in contact with air.
The silicone gel used was the same one as in Example 1, and release film (A) and release film (B) were identical to each other, and same one as release film (B) in Example 2.

### [Example 4]

A sheet-like optical transparent pressure-sensitive adhesive laminate was obtained in the same way as in Example 3, except that addition amount of ethylene-bis-oleic acid amide in release film (B) was 3% by weight in Example 3.

### [Example 5]

A sheet-like optical transparent pressure-sensitive adhesive laminate was obtained in the same way as in Example 3, except that addition amount of ethylene-bis-oleic acid amide in release film (B) was 4% by weight in Example 3.

### [Example 6]

A roll-like optical transparent pressure-sensitive adhesive laminate having a width of 200 mm was obtained under the same conditions as in Example 4, except that, in Example 4, the step in which release film (A) was pasted to the air-contact cured surface was replaced with the take-up step in which said air-contact cured surface is taken up together with release film (B) while said air-contact cured surface was in contact with the back side of release film (B), and that a release treatment layer having a thickness of 75 µm and a content of ethylene-bis-oleic acid amide of 3% by weight was applied to the back side of release film (B) too to make the total thickness of release film (B) 200 µm.
In the take-up step, an air-contact side was tightly adhered to a core material made of polyvinyl chloride having an outer diameter of 20 mmϕ, and was taken up without occurrence of wrinkling or entraining of air.

### [Example 7]

A sheet-like optical transparent pressure-sensitive adhesive laminate was obtained in the same way as in Example 3, except that, in Example 3, raw material in Example 2 was used as the uncured liquid silicone gel material, in such a blend ratio of two liquids that penetration (JIS K2207 10g) after curing became 60.

### [Example 8]

A sheet-like optical transparent pressure-sensitive adhesive laminate was obtained in the same way as in Example 4, except that raw material in Example 2 was used as the uncured liquid silicone gel material in Example 4.

### [Example 9]

A sheet-like optical transparent pressure-sensitive adhesive laminate was obtained in the same way as in Example 3, except that raw material in Example 2 was used as the uncured liquid silicone gel material in Example 3.

### [Example 10]

A sheet-like optical transparent pressure-sensitive adhesive laminate was obtained in the same way as in Example 4, except that, in Example 4, raw material in Example 1 was used as the uncured liquid silicone gel material, in such a blend ratio of two liquids that penetration (JIS K2207 10g) after curing became 150.

### [Example 11]

A sheet-like optical transparent pressure-sensitive adhesive laminate was obtained in the same way as in Example 5, except that ethylene-bis-stearic acid amide (produced by NOF Corp., "ALFLOW H50") instead of ethylene-bis-oleic acid amide in Example 5.

### [Example 12]

A sheet-like optical transparent pressure-sensitive adhesive laminate was obtained in the same way as in Example 5, except that stearic acid amide (produced by NOF Corp., "ALFLOW S 10") instead of ethylene-bis-oleic acid amide in Example 5.

### [Example 13]

A sheet-like optical transparent pressure-sensitive adhesive laminate was obtained in the same way as in Example 5, except that oleic amide (produced by NOF Corp., "ALFLOW E10") instead of ethylene-bis-oleic acid amide in Example 5.

### [Example 14]

An optical transparent pressure-sensitive adhesive laminate was obtained in the same way as in Example 2, except that heating conditions were 70°C for release film (A) side of the upper side, and 100°C for release film (B) side of the lower side in Example 2.

### [Example 15]

An optical transparent pressure-sensitive adhesive laminate was obtained in the same way as in Example 2, except that cooling conditions were carried out by natural cooling at room temperature for release film (A) side and forced cooling with a cooling plate cooled by water at 10°C for release film (B) side, namely rapid cooling (at greater cooling speed) for release film (B) side compared to release film (A) side.

### [Example 16]

A sheet-like optical transparent pressure-sensitive adhesive laminate was obtained in the same way as in Example 2, except that ethylene-bis-behenic acid amide was used instead of ethylene-bis-oleic acid amide in Example 2.
It should be noted that ethylene-bis-behenic acid amide used was prepared by dissolving behenic acid (C₂₁H₄₃COOH, produced by Tokyo Chemical Industry Co., Ltd., purity: 95% or more) and ethylene diamine (produced by Wako Pure Chemical Industries, Ltd., purity: 99% or more) [behenic acid : ethylene diamine = 0.67 : 0.33 (molar ratio)] under nitrogen atmosphere, reacting the mixture by heating, purifying in xylene and acetone, filtering and drying the product.

### [Example 17]

A sheet-like optical transparent pressure-sensitive adhesive laminate was obtained in the same way as in Example 3, except that ethylene-bis-behenic acid amide was used instead of ethylene-bis-oleic acid amide in Example 3.
It should be noted that ethylene-bis-behenic acid amide used was the same one as in Example 16.

### [Example n18]

A sheet-like optical transparent pressure-sensitive adhesive laminate was obtained in the same way as in Example 5, except that ethylene-bis-behenic acid amide was used instead of ethylene-bis-oleic acid amide in Example 5.
It should be noted that ethylene-bis-behenic acid amide used was the same one as in Example 16.

### [Example 19]

A sheet-like optical transparent pressure-sensitive adhesive laminate was obtained in the same way as in Example 10, except that ethylene-bis-behenic acid amide was used instead of ethylene-bis-oleic acid amide in Example 10.
It should be noted that ethylene-bis-behenic acid amide used was the same one as in Example 16.

### [Example 20]

A sheet-like optical transparent pressure-sensitive adhesive laminate was obtained in the same way as in Example 6, except that ethylene-bis-behenic acid amide was used instead of ethylene-bis-oleic acid amide in Example 6.
It should be noted that ethylene-bis-behenic acid amide used was the same one as in Example 16.

### [Example 21]

A sheet-like optical transparent pressure-sensitive adhesive laminate was obtained in the same way as in Example 2, except that ethylene-bis-lignoceric acid amide was used instead of ethylene-bis-oleic acid amide in Example 2.
It should be noted that ethylene-bis-lignoceric acid amide used was prepared by dissolving lignoceric acid and ethylene diamine [lignoceric acid: ethylene diamine = 0.71 : 0.29 (molar ratio)] under nitrogen atmosphere, reacting the mixture by heating, purifying in xylene and acetone, filtering and drying the product.

### [Example 22]

A sheet-like optical transparent pressure-sensitive adhesive laminate was obtained in the same way as in Example 3, except that ethylene-bis-lignoceric acid amide was used instead of ethylene-bis-oleic acid amide in Example 3.
It should be noted that ethylene-bis-lignoceric acid amide used was the same one as in Example 21.

### [Example 23]

A sheet-like optical transparent pressure-sensitive adhesive laminate was obtained in the same way as in Example 5, except that ethylene-bis-lignoceric acid amide was used instead of ethylene-bis-oleic acid amide in Example 5.
It should be noted that ethylene-bis-lignoceric acid amide used was the same one as in Example 21.

### [Example 24]

A sheet-like optical transparent pressure-sensitive adhesive laminate was obtained in the same way as in Example 10, except that ethylene-bis-lignoceric acid amide was used instead of ethylene-bis-oleic acid amide in Example 10.
It should be noted that ethylene-bis-lignoceric acid amide used was the same one as in Example 21.

### [Example 25]

A sheet-like optical transparent pressure-sensitive adhesive laminate was obtained in the same way as in Example 6, except that ethylene-bis-lignoceric acid amide was used instead of ethylene-bis-oleic acid amide in Example 6.
It should be noted that ethylene-bis-lignoceric acid amide used was the same one as in Example 21.

### [Example 26]

A sheet-like optical transparent pressure-sensitive adhesive laminate was obtained in the same way as in Example 5, except that ethylene-bis-fatty acid amide represented by said general formula (I), wherein R² represents behenic acid, R³ represents stearic acid was used instead of ethylene-bis-oleic acid amide in Example 5.
It should be noted that said ethylene-bis-fatty acid amide used was prepared by dissolving behenic acid, stearic acid and ethylene diamine [behenic acid: stearic acid: ethylene diamine = 0.64 : 0.03 : 0.33 (molar ratio)] under nitrogen atmosphere, reacting the mixture by heating, purifying in xylene and acetone, filtering and drying the product.

### [Comparative Example 1]

A sheet-like optical transparent pressure-sensitive adhesive laminate was obtained in the same way as in Example 3, except that release film (B) was changed to a release treated alkyd type release film produced by Panac Corp. (Type: T-9, film thickness: 0.1 mm).

### [Comparative Example 2]

A sheet-like optical transparent pressure-sensitive adhesive laminate was obtained in the same way as in Example 8, except that release film (B) was changed to a release treated alkyd type release film produced by Panac Corp. (Type: T-9, film thickness: 0.1 mm).

### [Comparative Example 3]

A sheet-like optical transparent pressure-sensitive adhesive laminate was obtained in the same way as in Example 3, except that release film (B) was changed to a fluorosilicone type release film produced by Unitika Ltd. (Type: FZ, film thickness: 0.1 mm).

### [Comparative Example 4]

A sheet-like optical transparent pressure-sensitive adhesive laminate was obtained in the same way as in Example 3, except that difference in pressure-sensitive adhesive forces between pressure-sensitive adhesive performance (Ga) and pressure-sensitive adhesive performance (Gb) was adjusted to 13 by setting addition amount of ethylene-bis-oleic acid amide in release film (B) at 1% by weight.

### [Comparative Example 5]

A sheet-like optical transparent pressure-sensitive adhesive laminate was obtained in the same way as in Example 3, except that pressure-sensitive adhesive forces of pressure-sensitive adhesive performance (Ga) and pressure-sensitive adhesive performance (Gb) were made equivalent by setting addition amount of ethylene-bis-oleic acid amide in release film (B) at 7% by weight.

### [Comparative Example 6]

A sheet-like optical transparent pressure-sensitive adhesive laminate was obtained in the same way as in Example 17, except that difference in pressure-sensitive adhesive forces between pressure-sensitive adhesive performance (Ga) and pressure-sensitive adhesive performance (Gb) was adjusted to 13 by setting addition amount of ethylene-bis-behenic acid amide in release film (B) at 1% by weight.

### [Comparative Example 7]

A sheet-like optical transparent pressure-sensitive adhesive laminate was obtained in the same way as in Example 17, except that difference in pressure-sensitive adhesive forces between pressure-sensitive adhesive performance (Ga) and pressure-sensitive adhesive performance (Gb) was adjusted to 1 by setting addition amount of ethylene-bis-behenic acid amide in release film (B) at 7% by weight.

### [Comparative Example 8]

A sheet-like optical transparent pressure-sensitive adhesive laminate was obtained in the same way as in Example 22, except that difference in pressure-sensitive adhesive forces between pressure-sensitive adhesive performance (Ga) and pressure-sensitive adhesive performance (Gb) was adjusted to 13 by setting addition amount of ethylene-bis-lignoceric acid amide in release film (B) at 1% by weight.

### [Comparative Example 9]

A sheet-like optical transparent pressure-sensitive adhesive laminate was obtained in the same way as in Example 22, except that difference in pressure-sensitive adhesive forces between pressure-sensitive adhesive performance (Ga) and pressure-sensitive adhesive performance (Gb) was adjusted to 1 by setting addition amount of ethylene-bis-lignoceric acid amide in release film (B) at 7% by weight.

### (Evaluations)

For the optical transparent pressure-sensitive adhesive bodies and the optical transparent pressure-sensitive adhesive laminates prepared in Examples 1 to 26 and Comparative Examples 1 to 9, properties and performances thereof were evaluated by the following evaluation methods. The evaluation results are shown in Tables 1 to 4.
It should be noted that, in Tables 1 to 4, descriptions of bis-A1, bis-A2, bis-A3, bis-A4 and bis-A5 represent ethylene-bis-oleic acid amide, ethylene-bis-stearic acid amide, ethylene-bis-behenic acid amide, ethylene-bis-lignoceric acid amide, and ethylene-bis-fatty acid amide, respectively, and mono-A1 and mono-A2 represent stearic acid amide and oleic acid amide, respectively.

### (i) Adhesive property (Pressure-sensitive adhesive property):

Pressure-sensitive adhesive performance (Ga) and pressure-sensitive adhesive performance (Gb) were evaluated by the tilt type ball tack test according to JIS Z0237, "Test method for pressure-sensitive adhesive tape and pressure-sensitive adhesive sheet". A test piece was pasted on an inclined plate at 30 degrees, and balls were rolled on the surface of this test piece. Ball tack value was determined by the largest ball number among the balls stopped within a measurement section after 300 seconds.

### (ii) Peeling stability:

Peeling stability was evaluated sequentially along the following evaluation steps.

### Evaluation step (I):

Release film (A) was peeled off from said optical transparent pressure-sensitive adhesive body to allow pressure-sensitive adhesive surface (a) exposed on the surface. At this time, peeling stability was judged as ○ (acceptable) when only release film (A) could be peeled off without peeling off of release film (B), and judged as × (not acceptable) when release film (B) was peeled off even in the slightest extent.

### Evaluation step (II):

After an acrylic plate having a thickness of 1 mm (produced by Mitsubishi Rayon Co., Ltd., MR-200 L-001) as adherend (C) was pasted to said pressure-sensitive adhesive surface (a) without entraining foreign matter or air bubble, release film (B) was peeled off while adherend (C) was fixed by hand and release film (B was peeled off to allow pressure-sensitive adhesive surface (b) exposed on the surface. At this time, peeling stability was judged as o (acceptable) when only release film (B) could be peeled off without peeling in the pasting interface between adherend (C) and pressure-sensitive adhesive surface (a), and judged as × (not acceptable) when the pasting interface between adherend (C) and pressure-sensitive adhesive surface (a) was peeled off even in the slightest extent.

### Evaluation step (III):

After adherend (D) (an acrylic plate having the same specification as of said adherend (C)) was pasted to said pressure-sensitive adhesive surface (b) without entraining foreign matter or air bubble, and the laminate was left for 1 hour, adherend (C) was peeled off while adherend (D) was fixed by hand. At this time, peeling stability was judged as o (acceptable) when only adherend (C) could be peeled off without peeling in adherend (D) side, and judged as × (not acceptable) when adherend (D) side was peeled off even in the slightest extent.
In each evaluation step, 5 test samples were used, and peeling stability was judged as ○ (acceptable) only when all of the test samples were peeled off at the same sides, and judged as × (not acceptable) when even one test sample showed peeling at the opposite side. In addition, evaluation was terminated at the time when peeling stability was judged as × (not acceptable).

### (iii) Peeling strength:

Peeling strength (F1), peeling strength (F2), peeling strength (F3) and peeling strength (F4) were evaluated by measuring 180 degrees peeling pressure-sensitive adhesive force in pressure-sensitive adhesive force test according to JIS Z0237 "Test method for pressure-sensitive adhesive tape and pressure-sensitive adhesive sheet" using a 90 degrees peel tester at a pulling rate of 300 mm/min. Test sample for evaluation of peeling strength (F1) and peeling strength (F2) was prepared by tightly adhering uncured silicone gel raw materials to a release film on the opposite side to the measuring side through a primer as illustrated in Figure 10 (a) and Figure 10 (b), respectively, curing the silicone gel raw materials under the same configuration, heating and cooling conditions as in Examples 1 to 26 and Comparative Examples 1 to 9, and curing for further 24 hours after temperature of the cured surface became 23°C (evaluation sample type X).
In addition, evaluation sample for peeling strength (F3) and peeling strength (F4) was prepared by preparing said evaluation samples type X, peeling off the release film to form a pressure-sensitive adhesive surface to be measured in Examples in which the face to be measured was cured in contact with release film (as-is in Examples in which the face to be measured was cured in an open state), subsequently cleansing the surface of adherend (C or D) by wiping with ethanol, and pasting the pressure-sensitive adhesive surface of said evaluation sample type X to said cleansed surface, as illustrated in Figure 11 (a) and Figure 11 (b), respectively (evaluation sample type Y). Said pasting was carried out under the following conditions. The evaluation sample was pressed by a roller of 2 kg at a rate of 300 mm/min. for one reciprocal motion, thereafter left at 23°C for 20 to 40 minutes.
In addition, as an adherend, an acrylic plate having a thickness of 1 mm (produced by Mitsubishi Rayon Co., Ltd., MR-200 L001) was used.

### (iv) Other performances and properties and behaviors:

### Hardness:

Hardness was measured by penetration measuring method according to JIS K2207 "Petroleum asphalt".

**[Table 1]**

| | | | Example 1 | Example 2 | Example 3 | Example 4 | Example 5 | Example 6 | Example 7 | Example 8 |
|---|---|---|---|---|---|---|---|---|---|---|
| Form | | | Sheet | Sheet | Sheet | Sheet | Sheet | Roll | Sheet | Sheet |
| Curing conditions | Release treatment agent | Release film (A) | bis-A1 | bis-A1 | Nil | Nil | Nil | Nil | Nil | Nil |
| | | Release film (B) | bis-A1 | bis-A1 | bis-A1 | bis-A1 | bis-A1 | Both sides bis-A1 | bis-A1 | bis-A1 |
| | Content of fatty acid amide [w%] | Release film (A) | 4 | 3 | - | - | - | - | - | - |
| | | Release film (B) | 3 | 2 | 2 | 3 | 4 | 3/3 | 2 | 3 |
| | Curing temperature [°C] | | 75 | 75 | 75 | 75 | 75 | 75 | 75 | 75 |
| Hardness | Penetration | | 100 | 80 | 100 | 100 | 100 | 100 | 60 | 80 |
| Tack test | Ga: Ball No. | | No. 17 | No. 9 | No. 17 | No. 17 | No. 17 | No. 17 | No. 5 | No. 9 |
| | Gb: Ball No. | | No. 19 | No. 12 | No. 19 | No. 19 | No. 19 | No. 19 | No. 8 | No. 12 |
| Peeling strength measurement 90 degrees peeling | F1 [N/20 mm] | | 0.15 | 0.14 | 0.10 | 0.08 | 0.10 | 0.08 | 0.07 | 0.06 |
| | F2 [N/20mm] | | 0.21 | 0.24 | 0.24 | 0.20 | 0.15 | 0.20 | 0.15 | 0.17 |
| | F3 [N/20 mm] | | 3.70 | 1.61 | 3.82 | 3.73 | 3.72 | 3.73 | 1.32 | 1.60 |
| | F4 [N/20 mm] | | 3.90 | 1.75 | 4.08 | 3.84 | 3.97 | 3.84 | 1.42 | 1.70 |
| | F2-F1 [N/20 mm] | | 0.06 | 0.10 | 0.14 | 0.12 | 0.05 | 0.12 | 0.08 | 0.11 |
| | F3-F2 [N/10 mm] | | 3.49 | 1.37 | 3.58 | 3.53 | 3.57 | 3.53 | 1.17 | 1.43 |
| Peeling stability evaluation | Evaluation step I | | ○ | ○ | ○ | ○ | ○ | ○ | ○ | ○ |
| | Evaluation step II | | ○ | ○ | ○ | ○ | ○ | ○ | ○ | ○ |
| | Evaluation step III | | ○ | ○ | ○ | ○ | ○ | ○ | ○ | ○ |

**[Table 2]**

| | | | Example 9 | Example 10 | Example 11 | Example 12 | Example 13 | Example 14 | Example 15 |
|---|---|---|---|---|---|---|---|---|---|
| Form | | | Sheet | Sheet | Sheet | Sheet | Sheet | Sheet | Sheet |
| Curing conditions | Release treatment agent | Release film (A) | Nil | Nil | Nil | Nil | Nil | bis-A1 | bis-A1 |
| | | Release film (B) | bis-A1 | bis-A1 | bis-A2 | mono-A1 | mono-A2 | bis-A1 | bis-A1 |
| | Content of fatty acid amide [w%] | Release film (A) | - | - | - | - | - | 3 | 3 |
| | | Release film (B) | 2 | 4 | 4 | 4 | 4 | 2 | 2 |
| | Curing temperature [°C] | | 75 | 75 | 75 | 75 | 75 | 75/100 | 75 |
| Hardness | Penetration | | 80 | 150 | 100 | 100 | 100 | 100 | 100 |
| Tack test | Ga: Ball No. | | No. 9 | No. 20 | No. 17 | No. 17 | No. 17 | No. 9 | No. 9 |
| | Gb: Ball No. | | No. 12 | No. 32 . | No. 19 | No. 19 | No. 19 | No. 11 | No. 12 |
| Peeling strength measurement 90 degrees peeling | F1 [N/20 mm] | | 0.08 | 0.15 | 0.11 | 0.08 | 0.08 | 0.13 | 0.12 |
| | F2 [N/20 mm] | | 0.21 | 0.22 | 0.16 | 0.20 | 0.20 | 0.20 | 0.30 |
| | F3 [N/20 mm] | | 1.59 | 4.20 | 3.71 | 3.73 | 3.73 | 1.60 | 1.61 |
| | F4 [N/20 mm] | | 1.72 | 5.20 | 3.95 | 3.84 | 3.84 | 1.71 | 1.73 |
| | F2-F1 [N/20 mm] | | 0.13 | 0.13 | 0.05 | 0.12 | 0.12 | 0.07 | 0.18 |
| | F3-F2 [N/20 mm] | | 1.38 | 1.38 | 3.55 | 3.53 | 3.53 | 3.50 | 3.41 |
| Peeling stability evaluation | Evaluation step I | | ○ | ○ | ○ | ○ | ○ | ○ | ○ |
| | Evaluation step II | | ○ | ○ | ○ | ○ | ○ | ○ | ○ |
| | Evaluation step III | | ○ | ○ | ○ | ○ | ○ | ○ | ○ |

**[Table 3]**

| | | | Example 16 | Example 17 | Example 18 | Example 19 | Example 20 | Example 21 | Example 22 | Example 23 | Example 24 | Example 25 | Exampl 26 |
|---|---|---|---|---|---|---|---|---|---|---|---|---|---|
| Form | | | Sheet | Sheet | Sheet | Sheet | Sheet | Roll | Sheet | Sheet | Sheet | Roll | Sheet |
| Curing conditions | Release treatment agent | Release film (A) | bis-A3 | Nil | Nil | Nil | Nil | bis-A4 | Nil | Nil | Nil | Nil | Nil |
| | | Release film (B) | bis-A3 | bis-A3 | bis-A3 | bis-A3 | Both sides bis-A3 | bis-A4 | bis-A4 | bis-A4 | bis-A4 | Both sides bis-A4 | bis-A5 |
| | Content of fatty acid amide [w%] | Release film (A) | 3 | - | - | - | - | 3 | - | - | - | - | - |
| | | Release film (B) | 2 | 2 | 4 | 4 | 3/3 | 2 | 2 | 4 | 4 | 3/3 | 4 |
| | Curing temperature [°C] | | 75 | 75 | 75 | 75 | 75 | 75 | 75 | 75 | 75 | 75 | 75 |
| Hardness | Penetration | | 80 | 100 | 100 | 150 | 100 | 80 | 100 | 100 | 150 | 100 | 100 |
| Tack test | Ga: Ball No. | | No. 9 | No. 17 | No. 17 | No. 21 | No. 17 | No. 10 | No. 17 | No. 17 | No. 21 | No. 17 | No. 17 |
| | Gb: Ball No. | | No. 12 | No. 19 | No. 19 | No. 32 | No. 19 | No. 13 | No. 19 | No. 19 | No. 32 | No. 19 | No. 19 |
| Peeling strength measurement 90 degrees peeling | F1 [N/20 mm] | | 0.16 | 0.14 | 0.10 | 0.30 | 0.10 | 0.20 | 0.15 | 0.15 | 0.30 | 0.14 | 0.12 |
| | F2 [N/20 mm] | | 0.26 | 0.25 | 0.16 | 0.43 | 0.18 | 0.30 | 0.30 | 0.20 | 0.48 | 0.25 | 0.18 |
| | F3 [N/20 mm] | | 1.62 | 3.80 | 3.75 | 8.50 | 3.75 | 1.59 | 3.90 | 3.81 | 8.50 | 3.82 | 3.80 |
| | F4 [N/20 mm] | | 1.75 | 4.10 | 4.01 | 8.70 | 3.86 | 1.72 | 4.12 | 4.00 | 8.90 | 3.91 | 4.05 |
| | F2-F1 [N/20 mm] | | 0.10 | 0.11 | 0.06 | 0.13 | 0.08 | 0.10 | 0.14 | 0.05 | 0.18 | 0.11 | 0.06 |
| | F3-F2 [N/20 mm] | | 1.36 | 3.55 | 3.59 | 8.02 | 3.57 | 1.29 | 3.60 | 3.61 | 8.02 | 3.57 | 3.62 |
| Peeling stability evaluation | Evaluation step I | | ○ | ○ | ○ | ○ | ○ | ○ | ○ | ○ | ○ | ○ | ○ |
| | Evaluation step II | | ○ | ○ | ○ | ○ | ○ | ○ | ○ | ○ | ○ | ○ | ○ |
| | Evaluation step III | | ○ | ○ | ○ | ○ | ○ | ○ | ○ | ○ | ○ | ○ | ○ |

**[Table 4]**

| | | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 |
|---|---|---|---|---|---|---|---|---|---|---|---|
| Form | | | Sheet | Sheet | Sheet | Sheet | Sheet | Sheet | Sheet | Sheet | Sheet |
| Curing conditions | Release treatment agent | Release film (A) | Nil | Nil | Nil | Nil | Nil | Nil | Nil | Nil | Nil |
| | | Release film (B) | Alkyd | Alkyd | Fluoro-silicone | bis-A1 | bis-A1 | bis-A3 | bis-A3 | bis-A4 | bis-A4 |
| | Content of fatty acid amide [w%] | Release film (A) | - | - | - | - | - | - | - | - | - |
| | | Release film (B) | 0 | 0 | 0 | 1 | 7 | 1 | 7 | 1 | 7 |
| | Curing temperature [°C] | | 75 | 75 | 75 | 75 | 75 | 75 | 75 | 75 | 75 |
| Hardness | Penetration | | 100 | 80 | 100 | 100 | 100 | 100 | 100 | 100 | 100 |
| Tack test | Ga: Ball No. | | No. 17 | No. 9 | No. 17 | No. 17 | No. 17 | No. 17 | No. 17 | No. 17 | No. 17 |
| | Gb: Ball No. | | No. 20 | No. 13 | No. 23 | No. 21 | No. 17 | No. 21 | No. 17 | No. 21 | No. 17 |
| Peeling measurement 90 degrees peeling | F1 [N/20 mm] | | 0.08 | 0.08 | 0.08 | 0.08 | 0.10 | 0.09 | 0.09 | 0.08 | 0.10 |
| | F2 [N/20 mm] | | 0.53 | 0.51 | 0.65 | 0.52 | 0.07 | 0.60 | 0.07 | 0.62 | 0.69 |
| | F3 [N/20 mm] | | 4.09 | 1.68 | 3.78 | 3.77 | 3.68 | 3.75 | 3.65 | 3.75 | 3.68 |
| | F4 [N/20 mm] | | 5.51 | 1.81 | 6.05 | 4.21 | 2.20 | 4.28 | 2.23 | 4.28 | 2.19 |
| | F2-F1 [N/20 mm] | | 0.45 | 0.43 | 0.57 | 0.44 | -0.03 | 0.51 | -0.02 | 0.54 | -0.01 |
| | F3-F2 [N/20 mm] | | 3.56 | 1.17 | 3.13 | 3.25 | 3.61 | 3.15 | 3.58 | 3.13 | 3.59 |
| Peeling stability evaluation | Evaluation step I | | ○ | ○ | ○ | ○ | × | ○ | × | ○ | × |
| | Evaluation step II | | × | × | × | × | - | × | - | × | - |
| | Evaluation step III | | - | - | - | - | - | - | - | - | - |

In the technology to form different pressure-sensitive adhesive surfaces from each other on an optical transparent pressure-sensitive adhesive body by thermal-curing uncured silicone gel raw materials in contact with different release films from each-other and adjusting pressure-sensitive adhesive property of pressure-sensitive adhesive characteristic face of the resultant optical transparent pressure-sensitive adhesive body with the release film to be used, as obvious from the evaluation results in Tables 1 to 4, the followings were verified. That is, when a release film using bisamide as a fatty acid amide type additive is applied on a release treatment layer, in particular, bisamide is used as the fatty acid amide type additive, by forming a release treatment layer containing 2 to 4% by weight of bisamide based on the total weight of the release treatment layer, an optical transparent pressure-sensitive adhesive body having faces with different pressure-sensitive adhesive properties from each other in a range of ball number 5 to 32 can be obtained. An optical transparent pressure-sensitive adhesive laminate obtained by laminating said optical transparent pressure-sensitive adhesive body and release film can realize superior peeling property and peeling selectivity, in particular, even in an optical transparent pressure-sensitive adhesive laminate composed of an optical transparent pressure-sensitive adhesive body having a high pressure-sensitive adhesive property ball number exceeding 15 superior peeling property and peeling selectivity can be realized.
In addition, since the optical transparent pressure-sensitive adhesive body of the present invention can exhibit superior peeling property and peeling selectivity even in a range of pressure-sensitive adhesive property of the conventional optical transparent pressure-sensitive adhesive body, it can be understood that pressure-sensitive adhesive property can be adjusted over a wide range.
Further, from the results of Example 5 and Examples 11 to 13, it can be understood that as said fatty acid amide type additive in the release treatment layer, bisamide such as saturated fatty acid bisamide and unsaturated fatty acid bisamide exhibits similar effect, and also monoamide such as saturated fatty acid amide and unsaturated fatty acid amide exhibits similar effect.

In addition, it can be understood that in the case when uncured silicone gel raw materials are sandwiched by release film (A) and release film (B) both having different content of bisamide from each other in the release films and thermal-cured as in Examples 1 and 2 of the first aspect, or in the case when uncured silicone gel raw materials are cured while one surface is in contact with air and another surface is in contact with release film (B) as in Examples 3 to 15 of the second aspect, different pressure-sensitive adhesive properties between the surface side and the back side and superior peeling property and peeling selectivity can be realized in both cases.
Further, it can be understood that even in such an embodiment that release treatment containing a prescribed amount of bisamide is carried out onto both sides of release film, and uncured silicone gel raw materials are cured while one surface is in contact with air and another surface is in contact with release film (B), thereafter taken up in a roll-shape, as in Example 6, similar effect is exhibited.
In addition, by setting pressure-sensitive adhesive performance Ga of pressure-sensitive adhesive surface (a) and pressure-sensitive adhesive performance Gb of pressure-sensitive adhesive surface (b) of the optical transparent pressure-sensitive adhesive body so that Ga and Gb satisfy the relationship of Ga < Gb, and exhibit 5 to 32 in ball number in the tilt type ball tack test (tilt angle: 30 degrees) according to JIS Z0237, and difference between ball numbers of Ga and Gb is 2 to 12, and preferably 2 to 5, stable peeling selectivity was exhibited in a series of peeling and pasting works. In addition, in reworking, peeling on one surface (lower peeling strength side) could be stably realized.
Further, since any one of the optical transparent pressure-sensitive adhesive body in Examples 1 to 15 has a high pressure-sensitive adhesive property, peeling or generation of air bubble was not observed even after pasting to acrylic plate or glass plate as an adherend and thereafter leaving for long time at room temperature.
It should be noted that, as for reworkability, Examples 1 to 26 were examples of evaluation for reworkability in such a case that adherend (C) was selectively peeled off, because acrylic plate and glass plate were used as adherend (C) and adherend (D), respectively, and peeling strengths F3 and F4 satisfied the relationship of F3 < F4. However, it is obvious and no need to verify that reworkability can be also secured in such a case that F3 and F4 satisfies the relationship of F3 > F4 (adherend (D) is selectively peeled off) depending on combinations of kinds (material, surface state, and the like) of adherend (C) and adherend (D).

In addition, by any one of the production method of the eleventh to the thirteenth aspects (inventions) of the present invention, the above-described peeling stability can be realized, and further, it can be understood that peeling stability can be adjusted by heating temperature and cooling rate in the curing step, as described in Examples 14 and 15.

Further, it can be understood that even by using different kind of fatty acid group, similar effect to those in Examples 1 to 15 can be obtained as described in Examples 16 to 26. In particular, it can be understood that the present invention is effective to the pressure-sensitive adhesive surface of an optical transparent pressure-sensitive adhesive body having such great pressure-sensitive adhesive force as ball number 32.

On the other hand, when pressure-sensitive adhesive surface of an optical transparent pressure-sensitive adhesive body had pressure-sensitive adhesive force exceeding ball number 15, alkyd type and fluorosilicone type release films which had been commonly used heretofore as a light release film could not realize prescribed peeling property or peeling selectivity in the peeling works from peeling off of release film (A) to rework, as shown in Comparative Examples 1 to 3 in the evaluation results in Table 4.
In addition, it can be understood that even when a release film having a release treatment layer containing any kind of bisamide was used, stable peeling property cannot be obtained if addition amount of bisamide is out of prescribed range, as shown in Comparative Examples 4 to 9. In particular, when bisamide was added excessively as in Comparative Examples 5, 7 and 9, bisamide migrated to the surface of optical transparent pressure-sensitive adhesive body, reduced pressure-sensitive adhesive force, and made a difference between pressure-sensitive adhesive forces of pressure-sensitive adhesive performance (Ga) and pressure-sensitive adhesive performance (Gb) smaller than the desired range. As a result, F1 and F2 were reversed, and peeling selectivity became extremely worse from the step of peeling off of release film (A).

### INDUSTRIAL APPLICABILITY

Since the optical transparent pressure-sensitive adhesive body of the present invention has greater pressure-sensitive adhesive force and more superior peeling stability compared with conventional optical transparent pressure-sensitive adhesive body having different pressure-sensitive adhesive properties between the surface side and the back side, superior tight adhesive property can be maintained even after pasting to an adherend such as image display devices. In addition, in the case of pasting, peeling site selectivity between both sides of the transparent pressure-sensitive adhesive body and a release sheet can be stably obtained, in addition, in the case of rework, that is, re-pasting, in which the transparent pressure-sensitive adhesive body is removed from an optical component, peeling site selectivity for both sides of an transparent pressure-sensitive adhesive body can be stably and easily expressed, therefore, the optical transparent pressure-sensitive adhesive body of the present invention can be applied to a wide range of optical components, in particular, suitably used for display and the like.
Further, when recycling is considered, the present invention can contribute to efficient recovery of an image display element, due to stabilized peeling site selectivity.

### DESCRIPTION OF REFERENCE NUMERALS

1, 100, 101, 102, 103, 104, 105: Optical transparent pressure-sensitive adhesive laminate;
2: Optical transparent pressure-sensitive adhesive body;
21: Pressure-sensitive adhesive surface (a);
22: Pressure-sensitive adhesive surface (b);
3: Release film (A);
4: Release film (B);
31, 32, 311, 41, 42, 411: Release treatment layer;
35,45: Base material for film;
5: Uncured optical transparent pressure-sensitive adhesive body raw materials;
6: Adherend (C);
61: Adherend (D);
62: Protective plate;
63, 631, 632: Polarizing plate;
65: Electric type display element (liquid crystal element, organic EL element, plasma emission element, and the like);
70: Spacer (mold form);
71: Raw materials container;
73: Primer;
75: Winding core;
80: Heating device (heater);
81: Doctor blade (squeegee plate);
82: Raw materials feeding device;
83: Cooling device;
84, 841, 842, 843, 844, 845: Transporting device (conveyor);
85: Calender roll;
86: Sheet cutting device;
87: Release film (A) pasting device;
91: Release film (B) feeding device (roll);
92: Release film (A) feeding device (roll);
93: Release film (A) peeling and recovery device (roll);
94: Release film (A) pasting and feeding device (roll);

## Claims

1. An optical transparent pressure-sensitive adhesive body having pressure-sensitive adhesive surface (a) and pressure-sensitive adhesive surface (b) with different pressure-sensitive adhesive property, and being formed with an addition reaction type silicone gel, **characterized in**
**that** pressure-sensitive adhesive performance (Ga) of pressure-sensitive adhesive surface (a) and pressure-sensitive adhesive performance (Gb) of pressure-sensitive adhesive surface (b) satisfy a relationship of Ga < Gb, and pressure-sensitive adhesive performance (Ga) and pressure-sensitive adhesive performance (Gb) have 5 to 32 in ball number and 2 to 12 in ball number difference in the tilt type ball tack test (tilt angle: 30 degrees) according to JIS Z0237; and
**that** pressure-sensitive adhesive surface (a) and pressure-sensitive adhesive surface (b) are formed by closely adhereing an uncured raw material of said addition reaction type silicone gel to different release film (A) and release film (B) and thermal-curing them, and the release film (A) and the release film (B) have a release treatment layer comprising a fatty acid amide type additive on said closely adhered surface.

2. An optical transparent pressure-sensitive adhesive body having pressure-sensitive adhesive surface (a) and pressure-sensitive adhesive surface (b) with different pressure-sensitive adhesive property, and being formed with an addition reaction type silicone gel, **characterized in**
**that** pressure-sensitive adhesive performance (Ga) of pressure-sensitive adhesive surface (a) and pressure-sensitive adhesive performance (Gb) of pressure-sensitive adhesive surface (b) satisfy a relationship of Ga < Gb, and pressure-sensitive adhesive performance (Ga) and pressure-sensitive adhesive performance (Gb) have 5 to 32 in ball number and 2 to 12 in ball number difference in the tilt type ball tack test (tilt angle: 30 degrees) according to JIS Z0237; and
**that** the pressure-sensitive adhesive surface (a) is formed by thermal-curing the uncured raw material of said addition reaction type silicone gel by contact with air, and the pressure-sensitive adhesive surface (b) is formed by thermal-curing the uncured raw material of said addition reaction type silicone gel by close contact with a release treatment layer of release film (B) having the release treatment layer comprising a fatty acid amide type additive at least on one side thereof.

3. The optical transparent pressure-sensitive adhesive body according to claim 1 or 2, **characterized in that** said fatty acid amide type additive is at least one kind of bisamide selected from saturated fatty acid bisamide and unsaturated fatty acid bisamide.

4. The optical transparent pressure-sensitive adhesive body according to claim 3, **characterized in that** said release treatment layer comprises a bisamide and a resin component as main components, and that content of the bisamide is 2 to 4% by weight based on the total weight of the release treatment layer.

5. The optical transparent pressure-sensitive adhesive body according to claim 1 or 2, **characterized in that** peeling strength (F2) between said release film (B) and pressure-sensitive adhesive surface (b) is 0.5 N/20 mm or less of 90 degrees peeling pressure-sensitive adhesive force in pressure-sensitive adhesive force test according to JIS Z0237.

6. The optical transparent pressure-sensitive adhesive body according to claim 1 or 2, **characterized in that** peeling strength (F1) between release film (A) and pressure-sensitive adhesive surface (a), peeling strength (F2) between release film (B) and pressure-sensitive adhesive surface (b), peeling strength (F3) between pressure-sensitive adhesive surface (a) and adherend (C) satisfy the following relationships:
difference in 90 degrees peeling pressure-sensitive adhesive forces in pressure-sensitive adhesive force test according to JIS Z0237 between peeling strength (F1) and peeling strength (F2) is 0.01 to 0.5 N/20 mm; and
difference in 90 degrees peeling pressure-sensitive adhesive forces between peeling strength (F2) and peeling strength (F3) is 0.1 N/20 mm or more.

7. The optical transparent pressure-sensitive adhesive body according to claim 1 or 2, **characterized in that** said silicone gel has a hardness of 0 to 30 in Asker C hardness according to SRIS 0101 Standard, or 20 to 200 in penetration (25°C) according to JIS K2207.

8. The optical transparent pressure-sensitive adhesive body according to claim 1 or 2, **characterized in that** transmittance of said silicone gel is 80% or more in a wavelength range of 380 to 780 nm.

9. An optical transparent pressure-sensitive adhesive laminate, **characterized in that** release film (A) and release film (B) are laminated on pressure-sensitive adhesive surface (a) and pressure-sensitive adhesive surface (b) of the optical transparent pressure-sensitive adhesive body according to claim 1 or 2, respectively.

10. An optical transparent pressure-sensitive adhesive laminate, **characterized in that** release film (B) is laminated on pressure-sensitive adhesive surface (b) of the optical transparent pressure-sensitive adhesive body according to claim 2, and is further laminated in a roll-shape while the back side of release film (B) is in contact with pressure-sensitive adhesive surface (a).

11. A method for producing the optical transparent pressure-sensitive adhesive laminate according to claim 9, **characterized in that** the method comprises a forming step in which an uncured liquid addition reaction type silicone gel raw materials are sandwiched by release film (A) and release film (B) and thickness thereof is set; a heating step in which the silicone gel raw materials are thermal-cured after forming or concurrently with forming; and cooling step in which the cured silicone gel obtained in said heating step is cooled down together with release film (A) and release film (B), and that release film (A) and release film (B) are different from each other, and have a release treatment layer comprising a fatty acid amide type additive on the addition reaction type silicone gel raw materials side.

12. A method for producing the optical transparent pressure-sensitive adhesive laminate according to claim 9, **characterized by** comprising a forming step in which uncured liquid addition reaction type silicone gel raw materials are fed on a release treatment layer of release film (B) having the release treatment layer comprising a fatty acid amide type additive at least on one side thereof, and thickness thereof is set; a heating step in which said uncured silicone gel raw materials are thermal-cured while at least a part of the surface of said uncured silicone gel raw materials not contacting with the release film (B) is made contact with air after forming or concurrently with forming; a cooling step in which the cured silicone gel obtained in said heating step is cooled down together with said release film (B); and a release film pasting step in which release film (A) is pasted to the thermal-cured surface by contacting with air in said heating step.

13. A method for producing the optical transparent pressure-sensitive adhesive laminate according to claim 10, **characterized by** comprising a forming step in which uncured liquid addition reaction type silicone gel raw materials are fed on a release treatment layer of release film (B) having the release treatment layer comprising a fatty acid amide type additive at least on one side thereof, and thickness thereof is set; a heating step in which said uncured silicone gel raw materials are thermal-cured while at least a part of the surface of said uncured silicone gel raw materials not contacting with the release film (B) is made contact with air after forming or concurrently with forming; a cooling step in which the cured silicone gel obtained in said heating step is cooled down together with said release film (B); and taking-up step in which the cured silicone gel is taken up together with release film (B) while pressure-sensitive adhesive surface (a) formed by curing in contact with air in said heating step is in contact with the back side of said release film (B).

14. The method for producing the optical transparent pressure-sensitive adhesive laminate according to any one of claims 11 to 13, **characterized in that** in said heating step, a heating temperature in the side where said uncured silicone gel raw materials are in contact with release film (A) or air and a heating temperature in the side where the raw materials are in contact with release film (B) are different from each other.

15. The method for producing the optical transparent pressure-sensitive adhesive laminate according to any one of claims 11 to 13, **characterized in that** in said cooling step, cooling rate gradients in the side where said cured silicone gel is in contact with release film (A) or air and the side where the silicone gel is in contact with release film (B) are different from each other.
